# EUROPÄISCHE PATENTANMELDUNG

(11) **EP 3 045 351 A2**
(43) Veröffentlichungstag der Anmeldung: **20.07.2016**
(21) Anmeldenummer: 15161192.8
(22) Anmeldetag: 26.03.2015
(51) Int. Cl.: B60Q 1/26, B60Q 1/50, F21S 8/10, B60Q 1/38

(54) **Verfahren zur Erzeugung einer Prä- und/oder Postfahrassistenzfunktion eines Fahrzeugs**

(30) Priorität: 19.01.2015 DE 202015100207 U
(71) Anmelder: odelo GmbH, 70329 Stuttgart (DE)
(72) Erfinder: Vollmer, Marco, 71332 Waiblingen (DE)
(74) Vertreter: Benninger, Johannes

(57) **Zusammenfassung**

Es wird ein Verfahren zur Erzeugung einer Prä- und/oder Postfahrassistenzfunktion eines Fahrzeugs durch Betrieb mindestens einer Lichtquelle (110, 220) wenigstens eines Leuchtmittels zumindest einer Fahrzeugleuchte des Fahrzeugs beschrieben. Das Verfahren sieht die Erzeugung eines oder mehrerer zur Anzeige einer Prä- und/oder Postfahrassistenzfunktion dienender Lichtsignale vor, die durch Betrieb mindestens einer Lichtquelle (110, 220) wenigstens eines Leuchtmittels zumindest einer Fahrzeugleuchte erhalten werden. Das Verfahren sieht vor, dass die durch ein oder mehrere Lichtsignale einer oder mehrerer Fahrzeugleuchten erfüllte Prä- und/oder Postfahr-Assistenzfunktion einem Benutzer eines Fahrzeugs vor und/oder nach einer Fahrt Informationen über den Zustand des Fahrzeugs anzeigt, ohne dass sich dieser im Fahrzeug befindet. Das mindestens eine der Erfüllung der Prä- und/oder Postfahrassistenzfunktion dienende Lichtsignal gibt durch eine veränderliche und/oder vorgegebene Lichtfarbe und/oder eine veränderliche und/oder vorgegebene Wiederholsequenz und/oder durch eine veränderliche und/oder vorgegebene Leuchtfläche eine eindeutige Information über die Verfügbarkeit und/oder Fahrbereitschaft und/oder Reichweite eines Fahrzeugs ab.

## Beschreibung

Die Erfindung betrifft ein Verfahren zur Erzeugung einer Prä- und/oder Postfahrassistenzfunktion eines Fahrzeugs durch Betrieb mindestens einer Lichtquelle wenigstens eines Leuchtmittels zumindest einer Fahrzeugleuchte des Fahrzeugs gemäß dem Oberbegriff des Anspruchs 1.

Kurz auch als Fahrassistenzsysteme bezeichnete Fahrassistenzvorrichtungen dienen der Unterstützung eines Fahrers eines Kraftfahrzeugs bei der Durchführung bestimmter Vorgänge im Straßenverkehr. In modernen Kraftfahrzeugen, im Folgenden auch kurz als Fahrzeuge bezeichnet, werden bereits eine Vielzahl von Fahrassistenzsystemen für unterschiedlichste Aufgaben eingesetzt, zu deren Erfüllung Fahrassistenzsysteme verschiedene Fahrassistenzfunktionen aufweisen.

So erfüllen beispielsweise auch als Einparksysteme bezeichnete Fahrassistenzsysteme Fahrassistenzfunktionen zur Unterstützung eines Fahrers eines Fahrzeugs beim Einparken in eine Parklücke. Dabei vermisst das Einparksystem mit beispielsweise seitlich am Fahrzeug angebrachten Sensoren eine mögliche Parklücke, berechnet aus den Lückendaten eine Einparktrajektorie und steuert das Fahrzeug beispielsweise durch aktiven Lenkeingriff und/oder durch Fahranweisungen in die Parklücke. Während des Einparkvorgangs bzw. beim Einparken wird die Distanz zu die Parklücke begrenzenden Objekten durch Sensoren überwacht.

Neben der beschriebenen Fahrassistenzfunktion zur Einparkunterstützung ist bekannt, den Fahrer beim drohenden Verlassen einer Fahrspur hierauf aufmerksam zu machen und/oder durch aktiven Lenkeingriff ein Manöver des letzten Augenblicks durchzuführen, ebenso wie dies bei Notbremsfahrassistenzfunktionen bekannt ist, um eine drohende Kollision zu verhindern oder deren Folgen abzumildern. Weit verbreitet sind Fahrassistenzfunktionen zur Konstanthaltung einer voreingestellten Geschwindigkeit und/oder eines Sicherheitsabstands und/oder der Einhaltung einer voreingestellten Höchstgeschwindigkeit, sowie Fahrassistenzfunktionen zur Steuerung von Fahr- und Fernlichtfunktionen, um ohne Anspruch auf Vollständigkeit nur einige der bekannten Fahrassistenzfunktionen zu nennen.

Den bekannten Fahrassistenzfunktionen gemein ist deren unmittelbare Unterstützung eines Benutzers eines Fahrzeugs während der Teilnahme am Straßenverkehr.

Eine bekannte Postfahrassistenzfunktion sieht vor, das Fahrlicht und/oder Parklicht eines Fahrzeugs für eine voreinstellbare Zeitspanne nach dem Abstellen eines zuvor bei Dunkelheit betriebenen Fahrzeugs weiterhin zu betreiben.

In Verbindung beispielsweise mit mit anderen Benutzern geteilten Fahrzeugen, wie etwa Car-Sharing-Fahrzeugen, Mietfahrzeugen, Elektrofahrzeugen, aber auch bei der alleinigen Nutzung von Fahrzeugen durch nur einen Benutzer ist ferner eine Präfahrassistenzfunktion bekannt, welche die Verfügbarkeit eines ausgewählten Fahrzeugs an einem bestimmten Standort via Internet und/oder Mobiltelefon anzeigt.

Nachteilig hieran ist die Notwendigkeit einer kostenpflichtigen Internetverbindung und/oder der Verfügbarkeit eines Mobiltelefons.

Darüber hinaus sind die erwähnten Prä- und Postfahrassistenzfunktionen ungeeignet, einem Benutzer konkrete Angaben über die Betriebsbereitschaft und/oder zu deren Erhalt erforderlicher Handlungen und/oder über die Erfüllbarkeit der Anforderungen des Benutzers an ein Fahrzeug anzuzeigen.

Momentan wird der Status von die Betriebsbereitschaft betreffenden Fahrzeugzuständen, wie etwa Batterieladestand, Tankfüllstand, in Anzeigen im Fahrzeuginnenraum, beispielsweise am Armaturenbrett angezeigt. Ausnahme bildet hierbei die bereits erwähnte Postfahrassistenzfunktion eines Weiterbetriebs des Fahrlichts und/oder Parklichts beim Abstellen eines Fahrzeugs nach einer Nachtfahrt, welche dem Fahrer eine zeitlang das Umfeld des Fahrzeugs beleuchtet oder ein teils auch mit einem akustischen Signal verknüpftes Aufleuchten/Blinken der Blinkleuchte zum Anzeigen einer ordnungsgemäßen Verriegelung oder Öffnen des Fahrzeugs.

Von außen kann der Fahrer allerdings nicht auf einfache Weise erkennen, ob beispielsweise die Fahrzeugbatterie seines Elektrofahrzeugs geladen ist.

Ein Ladekabel mit statusindizierter Leuchtfunktion ist durch http://www.elektroniknet.de/halbleiter/sonstiges/?gid=5041&_aid=115562&cp=1 bekannt. Das Ladekabel begleitet den Ladevorgang eines Fahrzeuges durch einen Farbwechsel des Kabelmantels visuell. Durch die Integration dieser Leuchteinheit entlang des Ladekabels kann ein Benutzer auch aus größerer Entfernung und ohne die Verwendung von Zusatzgeräten den Ladezustand erkennen. Zudem werden durch optische Signale Informationen wie eine Fehlfunktion angezeigt. Die gleichmäßige Ausleuchtung des Kabels über die komplette Länge reduziert in schlecht beleuchteten Bereichen die Stolpergefahr.

Nachteilig hieran ist, dass die Statusanzeige nur in Verbindung mit angeschlossenem Ladekabel erfolgt und darüber hinaus nur Aufschluss über den Ladezustand des Energiespeichers zulässt.

Zur Signalisierung vorgenommener oder beabsichtigter Handlungen eines Fahrers eines Fahrzeugs ist bekannt, vermittels an Fahrzeugen verbauten Fahrzeugleuchten erfüllbare Lichtfunktionen vorzusehen, welche der Kommunikation der vom Fahrer momentan vorgenommenen und/oder beabsichtigten Handlungen an andere Verkehrsteilnehmer dienen.

Eine Fahrzeugleuchte umfasst im Wesentlichen einen von einem Leuchtengehäuse und einer Lichtscheibe wenigstens zum Teil umschlossenen Leuchteninnenraum und mindestens ein darin beherbergtes, mindestens eine Lichtquelle umfassendes Leuchtmittel für wenigstens eine Lichtfunktion der Fahrzeugleuchte.

Jede Fahrzeugleuchte erfüllt je nach Ausgestaltung eine oder mehrere Aufgaben bzw. Funktionen. Zur Erfüllung jeder Aufgabe bzw. Funktion ist eine Lichtfunktion der Fahrzeugleuchte vorgesehen. Lichtfunktionen sind beispielsweise bei einer Ausgestaltung als Scheinwerfer eine die Fahrbahn ausleuchtende, meist in Abblend- und Fernlichtfunktion unterteilte Fahrlichtfunktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer auch als Rücklichtfunktion bezeichneten Schlusslichtfunktion, zur Sicherstellung einer Sichtbarkeit des Kraftfahrzeugs bei Tag und/oder Nacht, wie etwa bei einer Ausgestaltung als Heckleuchte oder Tagfahrleuchte.

Jede Lichtfunktion muss dabei eine beispielsweise gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest.

Für die einzelnen Lichtfunktionen sind zum Teil unterschiedliche Helligkeiten bzw. Sichtweiten sowie zum Teil unterschiedliche Lichtfarben zugeordnet.

Wenigstens einer Lichtquelle des Leuchtmittels einer Fahrzeugleuchte können ein oder mehrere zur Ausformung einer Lichtverteilung beitragende Optikelemente zur Lichtlenkung zugeordnet sein.

Die Lichtscheibe ist durch eine heutzutage meist aus einem Kunststoff hergestellte, transparente Abdeckung gebildet, welche den Leuchteninnenraum abschließt und die darin beherbergten Bauteile, wie etwa ein oder mehrere Leuchtmittel, Reflektoren sowie alternativ oder zusätzlich vorgesehene Optikelemente gegen Witterungseinflüsse schützt.

Das Leuchtengehäuse bzw. der Leuchteninnenraum kann in mehrere Kammern mit jeweils eigenen Lichtquellen und/oder Leuchtmitteln und/oder Optikelementen sowie gegebenenfalls Lichtscheiben unterteilt sein, von denen mehrere Kammern gleiche und/oder jede Kammer eine andere Lichtfunktionen erfüllen kann.

Bei den erwähnten Optikelementen kann es sich um wenigstens einen Reflektor und/oder um mindestens eine Linse und/oder um eine oder mehrere im Strahlengang zwischen wenigstens einer Lichtquelle des Leuchtmittels und der Lichtscheibe angeordnete Optikscheiben oder dergleichen handeln.

Beispielsweise kann in dem Leuchteninnenraum mindestens ein hinter wenigstens einer Lichtquelle zumindest eines Leuchtmittels angeordneter Reflektor untergebracht sein. Der Reflektor kann zumindest zum Teil durch ein separates Bauteil und/oder durch wenigstens einen Teil des Leuchtengehäuses selbst gebildet sein, beispielsweise vermittels einer zumindest teilweisen, reflektierenden Beschichtung.

Die Lichtscheibe selbst kann alternativ oder zusätzlich als ein Optikelement ausgebildet sein, beispielsweise indem sie vorzugsweise an deren Innenseite mit einer zur Erzeugung einer oder mehrerer zuvor erwähnter Lichtverteilungen beitragenden optischen Struktur versehen ist. Hierdurch kann gegebenenfalls auf eine Optikscheibe verzichtet werden.

Beispiele für Fahrzeugleuchten sind sowohl einer Fahrzeuginnenbeleuchtung und/oder als Leseleuchten dienende Innenraumleuchten, als auch am Fahrzeugbug, an den Fahrzeugflanken und/oder an den Seitenspiegeln sowie am Fahrzeugheck angeordnete Blinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine solche Kombination ist beispielsweise regelmäßig in den bekannten Heckleuchten verwirklicht. In diesen kommen beispielsweise Wiederholblinkleuchten, Begrenzungsleuchten, Bremsleuchten, Nebelleuchten sowie Rückfahrleuchten zum Einsatz, um nur eine von vielen in Heckleuchten verwirklichten Kombinationen zu nennen. Weder erhebt diese Aufzählung Anspruch auf Vollständigkeit, noch bedeutet dies, dass in einer Heckleuchte alle genannten Leuchten kombiniert werden müssen. So können beispielsweise auch nur zwei oder drei der genannten oder auch anderer Leuchten in einem gemeinsamen Leuchtengehäuse einer Heckleuchte miteinander kombiniert sein.

Als Lichtquellen kommen in Fahrzeugleuchten Glühlampen, Gasentladungslampen sowie unter anderem wegen ihres geringen Stromverbrauchs und geringen Bauraumbedarfs vermehrt Leuchtdioden zum Einsatz. Letztere bestehen aus mindestens einem Lichtemittierende-Diode-Halbleiter-Chip, kurz LED-Chip, sowie wenigstens einer beispielsweise durch Spritzgießen angeformten, den mindestens einen LED-Chip ganz oder teilweise umhüllenden Primäroptik. Auch sind Fahrzeugleuchten bekannt, in denen reine LED-Chips ohne angeformte Primäroptiken zum Einsatz kommen. Im Folgenden wird deshalb der Einfachheit halber nicht zwischen Leuchtdiode und LED-Chip unterschieden und statt dessen einheitlich der Begriff LED stellvertretend für beide Ausgestaltungen verwendet, es sei denn, es ist explizit etwas anderes erwähnt. Herausragende Eigenschaften von LEDs im Vergleich zu anderen, konventionellen Lichtquellen von Leuchtmitteln sind eine wesentlich längere Lebensdauer und eine wesentlich höhere Lichtausbeute bei gleicher Leistungsaufnahme. Dadurch und unter anderem auch wegen ihrer kompakteren Abmessungen können durch Verwendung von LEDs als Lichtquelle von Leuchtmitteln besonders kompakte Fahrzeugleuchten verwirklicht werden, die an fast jede nur erdenkliche Einbausituation angepasst sein können.

In Verbindung mit der Verwendung von LEDs als Lichtquellen von Leuchtmittel für Fahrzeugleuchten ist bekannt, mehrere LEDs von außerhalb des Leuchteninnenraums durch die Lichtscheibe hindurch sichtbar auf einer Fläche anzuordnen, welche bei eingeschalteten LEDs durch die Lichtscheibe hindurch als leuchtende Fläche wahrgenommen wird.

Durch DE 197 53 096 A1 ist eine Fahrzeugleuchte mit zumindest zwei Lichtfunktionen und einem von einem Leuchtengehäuse und einer Lichtscheibe umschlossenen Leuchteninnenraum bekannt. Die Fahrzeugleuchte weist mindestens eine mit Licht einheitlicher Lichtfarbe abstrahlenden LEDs als Lichtquellen besetzte Fläche zur Erfüllung einer Lichtfunktion auf. Die Fahrzeugleuchte weist wenigstens eine Flächenpartie auf, welche zur Erfüllung einer zusätzlichen Lichtfunktion zusätzliche, Licht einer einheitlichen, zusätzlichen Lichtfarbe abstrahlenden LEDs als Lichtquellen aufweist. Neben dieser Flächenpartie sind weitere Flächenpartien vorgesehen, in denen Licht blauer, grüner und roter Lichtfarbe abstrahlende LEDs als Lichtquellen angeordnet sein können, um durch additive Farbmischung eine Blinklichtfunktion oder eine Rückfahrlichtfunktion zu erfüllen. Jede Lichtfunktion wird dabei nur durch die für die jeweilige Lichtfunktion vorgesehenen LEDs erfüllt, wobei jeder Lichtfunktion genau die Fläche zur Verfügung steht, welche der von den hierfür vorgesehenen LEDs eingenommenen Flächenpartie entspricht.

Nachteilig hieran ist das inhomogene Erscheinungsbild der leuchtenden Fläche durch die punktartige Lichtquellen bildenden LEDs.

Durch DE 199 45 775 A1 ist eine Fahrzeugleuchte bekannt, welche mehrere leuchtende Flächen aufweist. Einige dieser leuchtenden Flächen können mehrere unterschiedliche Lichtfunktionen wahrnehmen. Fig. 2b dieser Druckschrift zeigt ein Beispiel, in dem sich mehrere Lichtfunktionen (Schluss-, Brems- und Nebelschlusslichtfunktion) die gesamten leuchtenden Flächen flächenanteilig teilen. Fig. 2a dieser Druckschrift zeigt ein Beispiel, in dem die leuchtenden Flächen entweder einer Schlusslicht- oder einer Bremslichtfunktion zugeordnet sind. Im Fall der Schlusslichtfunktion werden die durch dimmbare Lichtquellen gebildeten leuchtenden Flächen gedimmt bestromt und wenn eine Bremslichtfunktion benötigt wird, werden die gleichen Lichtquellen entsprechend höher bestromt. Der Schlusslichtfunktion ist während der gleichzeitigen Nutzung der Bremslichtfunktion somit keine Partie der leuchtenden Flächen zugeordnet. Die Schlusslichtfunktion geht damit während der gleichzeitigen Nutzung der Bremslichtfunktion sozusagen unter. Ein Betrachter nimmt also nur die hellere Bremslichtfunktion wahr.

Nachteilig hieran ist, dass die leuchtende Fläche nur Licht einer Lichtquellenfarbe abzustrahlen in der Lage ist und damit auch nur Lichtfunktionen gleicher Lichtfarbe erfüllt werden können.

Alternativ ist denkbar, beispielsweise als LEDs ausgeführte Lichtquellen in einem von außerhalb des Leuchteninnenraums durch die Lichtscheibe hindurch nicht einsehbaren Bereich anzuordnen, wobei das von den LEDs abgestrahlte Licht über einen Reflektor und/oder ein Lichtleiterelement in Richtung der Lichtscheibe verteilt und umgelenkt wird, welcher Reflektor und/oder welches Lichtleiterelement dann von außerhalb des Leuchteninnenraums durch die Lichtscheibe hindurch gesehen als leuchtende Fläche wahrgenommen wird, von welcher aus das Licht schließlich durch die Lichtscheibe hindurch aus dem Leuchteninnenraum austreten kann.

Nachteilig an dieser Variante ist ein teils erheblicher Bauraumbedarf im Leuchteninnenraum.

Ein gemeinsamer Nachteil der bisher angeführten Varianten ist außerdem ein mangelhaftes homogenes Erscheinungsbild der leuchtenden Fläche, das - wenn überhaupt - nur mit erheblichem technischen Aufwand verbessert werden kann.

Ein besonders homogenes Erscheinungsbild der leuchtenden Fläche verspricht die Verwendung organischer Leuchtdioden (Organic Light Emitting Diode; OLED) als Lichtquellen.

Eine OLED ist ein leuchtendes Dünnschichtbauelement aus organischen halbleitenden Materialien mit mindestens einer zwischen elektrisch leitenden, beispielsweise metallischen Schichten für Anode und Kathode eingeschlossen Emitterschicht.

Die Stärke oder anders ausgedrückt Dicke der Schichten liegt in einer Größenordnung von etwa 100 nm. Zum Schutz gegen Wasser, Sauerstoff sowie zum Schutz gegen andere Umwelteinflüsse, wie etwa Kratzbeschädigung und/oder Druckbelastung sind OLEDs typischerweise mit einem anorganischen Material insbesondere mit Glas verkapselt. Zwar gibt es Anstrengungen, das Glas durch Kunststoff zu ersetzen, die jedoch noch nicht vom gewünschten Erfolg gekrönt sind, weil die Dichtigkeit der alternativen Materialien für die Verkapselung nicht ausreichend gut genug ist.

Im Unterschied zu LEDs bedarf die Herstellung von OLEDs keine einkristallinen Materialien. Im Vergleich zu LEDs lassen sich OLEDs daher in kostengünstiger Dünnschichttechnik herstellen. OLEDs ermöglichen dadurch die Herstellung flächiger Lichtquellen, die einerseits sehr dünn und andererseits als durch die Lichtscheibe einer Fahrzeugleuchte hindurch sichtbare leuchtende Fläche eingesetzt einen besonders homogenes Erscheinungsbild aufweisen.

Ein auch unter Einbeziehung von OLEDs weiterhin bestehender Nachteil der zuvor beschriebenen, als Heckleuchten ausgebildeten Fahrzeugleuchten ist, dass zumindest jeder Lichtfarbe zumindest eine bestimmte, vorgegebene Partie der leuchtenden Fläche zugeordnet ist, und dass dadurch zumindest Lichtfunktionen unterschiedlicher Lichtfarbe jeweils nur ein Teil der gesamten Lichtscheibe als Lichtdurchtrittsfläche zur Verfügung steht.

Als Folge hiervon ist bei derartigen Fahrzeugleuchten mit mindestens zwei verschiedenen Lichtfunktionen unterschiedlicher Lichtfarben die jeder Lichtfunktion zur Verfügung stehende Lichtdurchtrittsfläche auf einen Teil der Lichtscheibe begrenzt. Dort sind den verschiedenen Lichtfarben bereits Lichtdurchtrittsflächen durch die Lichtscheibe hindurch zugeteilt, so dass jeder Lichtfunktion nur ein Teil der Fläche der Lichtscheibe zur Verfügung steht. Hierbei müssen sich die Lichtfunktionen unterschiedlicher Lichtfarben unabhängig von deren Betriebszustand bzw. unabhängig von deren Betrieb oder Nichtbetrieb die Fläche der Lichtscheibe für den Lichtaustritt immer teilen, so dass die jeder Lichtfunktion zur Verfügung stehende Lichtdurchtrittsfläche unabhängig von der Lichtfarbe immer auf einen Teil der Lichtscheibe begrenzt ist. Dies hat im Vergleich zu einer Nutzung der vollen Fläche der Lichtscheibe als Lichtdurchtrittsfläche für eine momentan allein benötigte Lichtfunktion den Nachteil einer Einschränkung der Sichtbarkeit und damit eine Minderung der Signalwirkung einhergehend mit einer Einschränkung der Verkehrssicherheit zur Folge.

Jede zusätzliche Lichtfunktion mit einer während des Betriebs eines Fahrzeugs nicht benötigten Lichtfarbe bedeutet hierbei eine zusätzliche Beschränkung der Lichtdurchtrittsfläche, einhergehend mit einer zusätzlichen Herabsetzung der Verkehrssicherheit.

Durch EP 2 503 222 A1 ist eine Fahrzeugleuchte mit zumindest zwei Lichtfunktionen und einem von einem Leuchtengehäuse und einer Lichtscheibe umschlossenen Leuchteninnenraum bekannt. Die als Heckleuchte ausgeführte Fahrzeugleuchte beherbergt mindestens eine von außen durch die Lichtscheibe hindurch zumindest zum Teil sichtbare Projektionsfläche sowie mindestens ein Mittel zur variablen Projektion der momentan benötigten einen oder mehreren Lichtfunktionen der Fahrzeugleuchte zumindest auf den vollständigen, von außen durch die Lichtscheibe hindurch sichtbaren Teil der Projektionsfläche. Bei dieser Fahrzeugleuchte steht zunächst zumindest der gesamte durch die Lichtscheibe hindurch sichtbare Teil der Projektionsfläche der variablen Projektion jeder allein und einzeln momentan benötigten Lichtfunktion zur Nutzung zur Verfügung. Durch Betrachtung der zumindest den von außerhalb des Leuchteninnenraums durch die Lichtscheibe hindurch sichtbaren Teil der Projektionsfläche vollständig einnehmenden Projektion von außerhalb des Leuchteninnenraums durch die Lichtscheibe hindurch steht dieser allein und einzeln momentan benötigten Lichtfunktion unabhängig von ihrer Lichtfarbe die gesamte Lichtscheibe als Lichtdurchtrittsfläche zur Verfügung. Wenn eine weitere Lichtfunktion momentan benötigt wird, teilen sich die daraus ergebenden variablen Projektionen aller unterschiedlicher Kombinationen momentan benötigter Lichtfunktionen die Nutzung. Wenn momentan mehrere Lichtfunktionen benötigt sind, teilen sich deren variable Projektionen die Projektionsfläche flächenanteilig. Dadurch wird immer die gesamte Lichtscheibe als Lichtdurchtrittsfläche für die eine oder mehrere momentan benötigten Lichtfunktionen genutzt.

Durch DE 20 2013 103 655 U1 ist die Erfüllung einer zuvor beschriebenen variablen Projektion vermittels einer Darstellungsfläche bestehend aus einer Vielzahl von RGB-Sub-OLED-Pixeln oder RGBY-Sub-OLED-Pixeln bekannt.

Durch DE 20 2014 101 538 U1 ist die Erfüllung einer zuvor beschriebenen variablen Projektion vermittels einer Darstellungsfläche aus einer mindestens der Anzahl der verschiedenen durch die Fahrzeugleuchte zu verwirklichenden Lichtfunktionen entsprechenden Zahl von durch jeweils einen OLED-Stapel gebildeten Partien bekannt.

Durch WO 2006/054225 A1 sind eine Lichtmischung roten, gelben und grünen Lichts, Lichteinkoppelbereiche und ein Lichtmischbereich bei einem Lichtleiter bekannt.

Fig. 6 der EP 2 290 281 A2 offenbart eine Lichtmischung in einem stabförmigen Lichtleiter, wobei die Lichteinkopplung von einem Ende des Lichtleiters via mit den Lichtquellen für die einzelnen Lichtfarben verbundenen Lichtleiterästen einem Farbmischbereich zugeführt wird, in dessen Verlängerung sich der Auskoppelbereich des Lichtleiters erstreckt.

Durch EP 2 384 934 A1 ist ein Leuchtmittel für eine Kraftfahrzeugleuchte mit mindestens einem Lichtleiter mit Lichtauskoppelfläche und Lichteinkoppelfläche nebst dieser zugeordneten Lichtquellen bekannt, wobei mehr als zwei Lichtfunktionen vorgesehen sind, welche durch kombiniertes Einschalten mehrerer Lichtquellen erfüllt werden, so dass mehr Lichtfunktionen erfüllt werden können, als eigenständige Lichtquellen vorgesehen sind.

Der Vollständigkeit halber sei noch erwähnt, dass so genannte intelligente Heckleuchten vorbekannt sind, welche während der Fahrt mit einem hiermit ausgestatteten Fahrzeug beispielsweise durch veränderliche Leuchtflächen anderen Verkehrsteilnehmern unterschiedliche Fahrzustände anzuzeigen versuchen.

Sämtliche einleitend beschriebenen Fahrzeugleuchten weisen die Einschränkung auf, dass sie ausschließlich Lichtfunktionen während eines Betriebs eines Fahrzeugs anzuzeigen vorgesehen sind.

Hierdurch ist die Erfüllung einer Fahrassistenzfunktion anhand einer Lichtfunktion einer Fahrzeugleuchte, wie die bereits erwähnte, das Fahrlicht eines Fahrzeugs für eine voreinstellbare Zeitspanne nach dem Abstellen eines zuvor bei Dunkelheit betriebenen Fahrzeugs weiterhin betreibende Postfahrassistenzfunktion, bisher unmittelbar an den Betrieb eines Fahrzeugs gekoppelt.

Anstrebsam ist eine Prä- und Postfahrassistenzfunktion, welche einem Benutzer ohne Rückgriff auf kostspielige Infrastruktur, wie etwa Internet und/oder Mobiltelefon, und/oder zusätzliche Einrichtungen, wie etwa Ladekabel, konkrete Angaben über die Erfüllbarkeit dessen Anforderungen an ein Fahrzeug anzuzeigen geeignet ist.

Eine Aufgabe der Erfindung ist, ein Verfahren zur Erzeugung einer entsprechenden Prä- und Postfahrassistenzfunktion anzugeben.

Die Aufgabe wird gelöst mit den Merkmalen des unabhängigen Anspruchs. Vorteilhafte Ausführungsformen sind in den abhängigen Ansprüchen, den Zeichnungen sowie in der nachfolgenden Beschreibung, einschließlich der zu den Zeichnungen zugehörigen, wiedergegeben.

Die Erfindung betrifft demnach ein Verfahren zur Erzeugung eines Prä- und/oder Postfahrassistenzfunktion eines Fahrzeugs durch Betrieb mindestens einer Lichtquelle wenigstens eines Leuchtmittels zumindest einer Fahrzeugleuchte des Fahrzeugs.

Das Verfahren sieht vor, durch den Betrieb mindestens einer Lichtquelle wenigstens eines Leuchtmittels zumindest einer Fahrzeugleuchte mindestens ein Lichtsignal zu erzeugen, das der Erfüllung der Prä- und/oder Postfahrassistenzfunktion dient.

Das Verfahren sieht damit die Erzeugung eines oder mehrerer zur Anzeige einer Prä- und/oder Postfahrassistenzfunktion dienender Lichtsignale vor, die durch Betrieb mindestens einer Lichtquelle wenigstens eines Leuchtmittels zumindest einer Fahrzeugleuchte erhalten werden.

Die durch ein oder mehrere Lichtsignale einer oder mehrerer Fahrzeugleuchten erfüllte Prä- und/oder Postfahr-Assistenzfunktion zeigt einem Benutzer eines Fahrzeugs vor und/oder nach einer Fahrt Informationen über den Zustand des Fahrzeugs an, ohne dass sich dieser im Fahrzeug befinden muss.

Das mindestens eine der Erfüllung der Prä- und/oder Postfahrassistenzfunktion dienende Lichtsignal gibt durch eine veränderliche und/oder vorgegebene Lichtfarbe und/oder eine veränderliche und/oder vorgegebene Wiederholsequenz und/oder durch eine veränderliche und/oder vorgegebene Leuchtfläche eine eindeutige Information über die Verfügbarkeit und/oder Fahrbereitschaft und/oder Reichweite eines Fahrzeugs ab.

Um beispielsweise einen Füllstand eines Energiespeichers eines Kraftfahrzeugs, wie beispielsweise eines Kraftstofftanks und/oder einer Fahrbatterie abzufragen, muss bis dato im Fahrzeug Platz genommen werden.

In Verbindung beispielsweise mit mit anderen Benutzern geteilten Fahrzeugen, wie etwa Car-Sharing-Fahrzeugen, Mietfahrzeugen, Elektrofahrzeugen, aber auch bei der alleinigen Nutzung von Fahrzeugen durch nur einen Benutzer ergibt sich bislang immer die Notwendigkeit, sich in das Fahrzeug zu setzen, um Informationen zu erhalten, die Aufschluss beispielsweise über die mit dem Fahrzeug zurücklegbare Strecke geben.

Die Erfindung schafft hier Abhilfe, indem eine oder mehrere Lichtquellen eines oder mehrerer zur Erfüllung einer oder mehrerer Lichtfunktionen einer Fahrzeugleuchte vorgesehene Leuchtmittel verwendet werden, um bei einer Annäherung eines Benutzers an ein Fahrzeug - sei es automatisch oder durch ein Signal des Benutzers - oder permanent oder in Zyklen, entsprechende, von einem Benutzer erkennbare Lichtsignale an die Umgebung abgeben, aus denen der Benutzer die gewünschten Informationen ableiten kann.

Das Verfahren kann eine Mehrfachverwendung einer oder mehrerer zur Erfüllung wenigstens einer Lichtfunktion zumindest einer Fahrzeugleuchte vorgesehener Lichtquellen zur Erzeugung mindestens eines Lichtsignals zur Erfüllung eine Prä- und/oder Postfahrassistenzfunktion vorsehen. Hierbei weist mindestens ein zur Erfüllung der Prä- und/oder Postfahrassistenzfunktion vorgesehenes Lichtsignal eine Lichtfarbe auf, wie sie ohnehin zur Erfüllung der von einer Fahrzeugleuchte erfüllbaren und im Straßenverkehr gesetzlich vorgeschriebenen Lichtfunktionen notwendig ist.

Ebenfalls kann hierbei mindestens ein zur Erfüllung der Prä- und/oder Postfahrassistenzfunktion vorgesehenes Lichtsignal eine für eine bestimmte Lichtfunktion im Straßenverkehr gesetzlich vorgeschriebene Lichtverteilung aufweisen.

Alternativ oder zusätzlich kann das Verfahren wenigstens eine eigens zur Erfüllung mindestens eines der Prä- und/oder Postfahrassistenzfunktion dienenden Lichtsignals vorgesehene Lichtquelle zumindest eines Leuchtmittels wenigstens einer Fahrzeugleuchte vorsehen.

Eine solche, eigens zur Erfüllung eines der Prä- und/oder Postfahrassistenzfunktion dienenden Lichtsignals vorgesehene Lichtquelle kann eine Lichtfarbe abstrahlen, wie sie zur Erfüllung der im Straßenverkehr gesetzlich vorgeschriebenen Lichtfunktionen in einer Fahrzeugleuchte nicht notwendig ist, beispielsweise grün.

Beispielsweise durch einen lichtfarbenmischenden Lichtleiter kann ein solches, eigens zur Erfüllung der Prä- und/oder Postfahrassistenzfunktion dienendes Lichtsignal grundsätzlich ebenfalls eine für eine bestimmte Lichtfunktion im Straßenverkehr gesetzlich vorgeschriebene Lichtverteilung aufweisen.

Das Verfahren kann beispielsweise vorsehen, dass das mindestens eine der Erfüllung der Prä- und/oder Postfahrassistenzfunktion dienende Lichtsignal durch eine veränderliche und/oder vorgegebene Lichtfarbe - beispielsweise ähnlich einer Ampel - und/oder eine veränderliche und/oder vorgegebene Wiederholsequenz - beispielsweise ähnlich einem Identifikationscode eines Seezeiches, etwa einem Leuchtturm - und/oder durch eine veränderliche und/oder vorgegebene Leuchtfläche - beispielsweise ähnlich einer visuellen Füllstandsanzeige beispielsweise einer Tankuhr oder eines Akkumulators - eine eindeutige Information über die Verfügbarkeit und/oder Fahrbereitschaft und/oder Reichweite eines Fahrzeugs abgibt.

So kann beispielsweise die Abgabe eines Lichtsignals grünen Lichts bei der Annäherung oder dem Entfernen eines Benutzers eine zumindest innerhalb einer zu erwartenden Nutzung volle Verfügbarkeit des Fahrzeugs signalisieren, wohingegen ein rotes Aufleuchten durch die Abgabe eines Lichtsignals roten Lichts den Bedarf des Nachfüllens, beispielsweise Nachtankens oder Aufladens eines Energiespeichers des Fahrzeugs anzeigen kann.

Das Verfahren kann vorsehen, eine Annäherung eines Benutzers an ein Fahrzeug zu erfassen und/oder zu überwachen und bei erfasster und/oder erkannter Annäherung wenigstens ein Lichtsignal zu erzeugen.

Alternativ oder zusätzlich kann das Verfahren vorsehen, eine bestimmte Frequenz oder ein bestimmtes Frequenzband elektromagnetischer Wellen zu überwachen, auf welcher Frequenz und/oder innerhalb welchen Frequenzbands ein Signal von einem Benutzer eines Fahrzeugs mittels einer geeigneten Sendeeinrichtung erzeugbar ist, beispielsweise mittels einer Infrarot und/oder Funkfernbedienung und/oder Netzwerkverbindung - etwa einer solchen, wie sie heutzutage in Verbindung mit Fahrzeugschlüsseln zum fernbedienbaren Öffnen und Abschließen eines Fahrzeugs, oder von mit Mobiltelefonen koppelbaren Freisprecheinrichtungen in Fahrzeugen bekannt sind, und bei empfangenem Signal wenigstens ein Lichtsignal zu erzeugen.

Alternativ oder zusätzlich kann das Verfahren vorsehen, in regelmäßigen Abständen und/oder durch ein von einem Benutzer auslösbares Ereignis gesteuert, beispielsweise durch eine Betätigung eines Türgriffs, und/oder innerhalb eines durch einen Eigentümer des Fahrzeugs vorgegebenen Zeitfensters, - beispielsweise ähnlich einem schlüssellosen Zugang zu einem Fahrzeug und/oder einem Funketikett - eine bestimmte Frequenz oder ein bestimmtes Frequenzband elektromagnetischer Wellen zu erzeugen, welche durch Interkation mit einer von einem Benutzer eines Fahrzeugs mitzuführenden Identifikationseinrichtung eine Antwort ebenfalls in Form elektromagnetischer Wellen erzeugt, die wiederum erfasst wird oder erfassbar ist, und bei erfasster Antwort wenigstens ein Lichtsignal zu erzeugen.

Umgangssprachlich auch Funketiketten genannt, stellt RFID (radio-frequency identification) eine Technologie für Sender-Empfänger-Systeme zum automatischen und berührungslosen Identifizieren und Lokalisieren von Gegenständen, wie beispielsweise Artikeln vermittels Radiowellen dar. Sie erleichtert das Erfassen von Daten erheblich.

Ein RFID-System besteht aus dem RFID-Tag, welches sich an oder in einem Gegenstand befindet und in dessen Speicher zumindest einen kennzeichnenden Code enthält, sowie einem Lesegerät zum Auslesen dieser Kennung.

Die Kopplung geschieht durch vom Lesegerät erzeugte elektromagnetische Wechselfelder geringer Reichweite oder durch hochfrequente Radiowellen. Damit werden nicht nur Daten übertragen, sondern auch das RFID-Tag mit Energie versorgt.

Informationen können direkt auslesbar im Speicher des RFID-Tags abgelegt sein, oder sie können auf mindestens einem Server und/oder in mindestens einer Datenbank abgelegt und vermittels des im Speicher des RFID-Tags abgelegten Codes identifizierbar und dadurch mindestens einem Artikel zugeordnet sein.

Alternativ oder zusätzlich kann das Verfahren vorsehen, das Verlassen eines Fahrzeugs durch einen Benutzer des Fahrzeugs zu überwachen, beispielsweise anhand einer Sitzbelegungserkennung und/oder einem Öffnen und anschließendem Schließen einer Fahrzeugtür nach einer Benutzung des Fahrzeugs und nach erfasstem und/oder erkanntem Verlassen des Fahrzeugs wenigstens ein Lichtsignal zu erzeugen.

Vorteile ergeben sich insbesondere bei der abwechselnden Nutzung beispielsweise einer Flotte von Fahrzeugen durch mehrere Benutzer, wodurch vor Fahrtantritt auf einfache Weise ein den anstehenden Bedürfnissen eines Benutzers entsprechendes Fahrzeug aus der Flotte ausgewählt werden kann.

So genügt einem Benutzer, der eine kurze Wegstrecke zurückzulegen hat ein nur teilweise gefüllter Energiespeicher, wohingegen derjenige Benutzer, der eine weite Strecke zurückzulegen hat, ein Fahrzeug mit vollem Energiespeicher auswählen kann.

Das Verfahren kann vorsehen, dass ein Benutzer beispielsweise vermittels eines Mobiltelefons seine Anforderungen an ein Fahrzeug vorgeben kann, so dass entweder exakt diesen Anforderungen genügende Fahrzeuge durch Abgabe entsprechender Lichtsignale deren Verfügbarkeit signalisieren, oder solche Fahrzeuge durch Abgabe entsprechender Lichtsignale deren Verfügbarkeit signalisieren, die zumindest die Anforderungen des Benutzers erfüllen, demnach auch weit höheren Anforderungen genügen.

Das Verfahren kann eine Speicherung benutzertypischen Verhaltens vorsehen, wie beispielsweise durchschnittlich und/oder die letzten Fahrzyklen zurückgelegten Wegstrecken und/oder der wochentagstypisch zurückgelegten Wegstrecke, welches bei der Anzeige der Prä- und/oder Postfahrassistenzfunktion Berücksichtigung findet.

Technische Vorteile ergeben sich unter Anderem durch eine Reduktion unbeabsichtigt verbrauchter unvollständiger Ladezyklen bei Privat- sowie Miet-Elektrofahrzeugen.

Wichtig ist hervorzuheben, dass das Verfahren beispielsweise geeignet ist, Personen, wie beispielsweise Fahrern, potentiellen Fahrern, Angestellten von Mietwagenfirmen, die Möglichkeit zu geben, den Status eines Fahrzeuges, wie etwa Batterieladezustand, Tankfüllzustand, allgemeine Fahrbereitschaft des Fahrzeugs, Fahrzeug ist ordnungsgemäß abgeschlossen/verriegelt, sowie beispielsweise einen individuell konfigurierbaren Zustand, wie beispielsweise Motorwärme, der Leuten außen am Fahrzeug angezeigt werden kann und soll, anhand eines oder mehrerer Lichtsignale ähnlich einer Lichtfunktion einer Fahrzeugleuchte darzustellen. Dabei wird nicht zwingend eine zusätzliche Leuchtkammer oder ein zusätzlicher Lichtleiter in einer Fahrzeugleuchte benötigt, sondern ein bestehendes System kann mehrfach verwendet werden. Dieses mehrfache Verwenden kann beispielsweise durch Lichtmischung mehrerer Lichtquellen, wie etwa LEDs und OLEDs mit mehreren OLED-Stapel übereinander erfolgen, die so unterschiedliche Farben an einer Lichtaustrittsfläche erzeugen können und/oder durch gesteuertes Aufleuchtenlassen einer oder mehrerer Lichtquellen beispielsweise auch mit Hilfe von speziellen Farben und/oder anhand von Wiederholblinken und/oder Animation.

Denkbar ist beispielsweise die Bereitstellung eines roten und eines grünen Lichtsignals zur Ladezustandsanzeige eines Elektrofahrzeugs oder analog der Tankfüllung bei einem Fahrzeug mit Verbrennungsmotor vermittels einer ansonsten einer Fahrtrichtungsanzeige dienenden Wiederholblinklichtfunktion, die beim Öffnen und/oder Schließen und/oder bei einer Annäherung an das Fahrzeug aktiviert wird.

Schwellenwerte, oberhalb denen eine positive Verfügbarkeit durch Abgabe mindestens eines entsprechenden Lichtsignals, wie etwa eines Lichtsignals grüner Lichtfarbe, und/oder unterhalb denen eine negative Verfügbarkeit durch Abgabe mindestens eines entsprechenden Lichtsignals, wie etwa eines Lichtsignals roter Lichtfarbe angezeigt wird, können individuell festlegbar sein, beispielsweise anhand einer vom Halter einstellbarer Mindestreichweite, oder ähnlich der Berechnung einer Restreichweitenanzeige und/oder dem Selbstlernen von Automatikgetrieben bezogen auf geleistete Fahrzyklen.

Zur Verwirklichung des Verfahrens kann beispielsweise eine Fahrzeugleuchte mit einem Leuchtmittel mit wenigstens zwei Lichtquellen unterschiedlicher Lichtfarbe vorgesehen sein. Denkbar ist beispielsweise die Verwendung eines Leuchtmittels mit einem farbmischenden Lichtleiter mit mindestens zwei das von ihnen ausgestrahlte Licht in den Lichtleiter einkoppelnden Lichtquellen.

Für eine Zwillingseinkopplung des Lichts zweier Lichtquellen von einer Seite her in einen Lichtleiter beispielsweise mit Y-Form kann beispielsweise eine rote und eine grüne LED verwendet werden. Die Lichtquellen können nun alle Farben zwischen grün und rot an der beispielsweise eine leuchtende Fläche des Leuchtmittels und/oder einer Fahrzeugleuchte bildenden Auskoppelfläche des Lichtleiters erzeugen, einschließlich gelb. Daher kann der Lichtleiter einerseits eine Wiederholblinklichtfunktion erfüllen - andererseits einem potentiellen Benutzer am parkenden Fahrzeug, beispielsweise ähnlich einer auch als Welcome Home Funktion bezeichneten, das Fahrlicht eines Fahrzeugs für eine voreinstellbare Zeitspanne nach dem Abstellen eines zuvor bei Dunkelheit betriebenen Fahrzeugs weiterhin betreibende Postfahrassistenzfunktion, mittels beispielsweise eines blinkenden Lichtsignals roter Lichtfarbe signalisieren, dass die Batterie seines Elektronfahrzeugs geladen werden muss und mittels beispielsweise eines blinkenden Lichtsignals grüner Lichtfarbe signalisieren, dass der Akku voll geladen ist.

Eine entsprechende Fahrzeugleuchte verfügt über eine multifunktionale leuchtende Fläche, indem sie eine multifunktionale Leuchtfunktion mit Hilfe eines Lichtleiters erzeugt.

Ein Erfindungsgedanke ist hierbei, dass eine leuchtende Fläche mehrfach verwendet wird. Hierbei wird eine in einer Fahrzeugleuchte verbaute, beispielsweise zur Erfüllung einer Wiederholblinklichtfunktion vorgesehene leuchtende Fläche mehrfach verwendet, nämlich für die Wiederholblinklichtfunktion und für wenigstens ein eine Prä- und/oder Postfahrassistenzfunktion erfüllendes Lichtsignal. Daher wird der geometrisch eingeschränkte Raum in der Fahrzeugleuchte für die Darstellung von Lichtsignalen nutzbar gemacht, ohne dass zusätzlichen Reflektoren, Optikscheiben oder Lichtleiter sowie gegebenenfalls gesonderte Leiterbahnträger erforderlich sind, wie beispielsweise kurz als Platinen bezeichnete gedruckte Leiterbahnträger (PCB: Printed Circuit Board).

Wie bereits zum Verfahren beschrieben kann dies durch Aufleuchten von unterschiedlichen Farben und/oder Blinken der gesamten leuchtenden Fläche oder von einem oder mehreren Teilen der leuchtenden Fläche sowie einer Animation der einzelnen leuchtenden Flächen oder von Teilen hiervon ausgestaltet sein.

Zur Verwirklichung des Verfahrens kann alternativ eine Fahrzeugleuchte mit einem Leuchtmittel mit mindestens einer bei deren Betrieb wenigstens einen ersten Teil einer leuchtenden Fläche bildenden ersten Lichtquelle und mindestens einer bei deren Betrieb wenigstens einen zweiten Teil der leuchtenden Fläche bildenden zweiten Lichtquelle vorgesehen sein:
Die mindestens eine erste Lichtquelle strahlt bei deren Betrieb Licht einer Lichtfarbe einer ersten Lichtfunktion ab.

Die mindestens eine zweite Lichtquelle ist in der Lage, bei deren Betrieb Licht einer Lichtfarbe der ersten Lichtfunktion oder Licht einer Lichtfarbe einer zweiten Lichtfunktion abzustrahlen.

Bei Betrieb des Leuchtmittels ergeben sich dadurch zumindest drei unterschiedliche Betriebszustände:
- einen als Kaltzustand bezeichneten ersten Betriebszustand, bei dem alle Lichtquellen außer Betrieb sind.
- einen als ersten Warmzustand bezeichneten zweiten Betriebszustand, bei dem alle Lichtquellen Licht der selben Lichtfarbe der ersten Lichtfunktion abstrahlen. Hierbei steht die gesamte leuchtende Fläche der Erfüllung der ersten Lichtfunktion zur Verfügung, was deren Wahrnehmbarkeit und dadurch die Verkehrssicherheit einer mit einem solchen Leuchtmittel ausgestatteten Fahrzeugleuchte erhöht.
- einen als zweiten Warmzustand bezeichneten dritten Betriebszustand, bei dem die mindestens eine erste Lichtquelle Licht der Lichtfarbe der ersten Lichtfunktion abstrahlt und wenigstens eine zweite Lichtquelle Licht der Lichtfarbe der zweiten Lichtfunktion abstrahlt.

Darüber hinaus sind weitere Betriebszustände möglich oder denkbar, beispielsweise:
- ein Betriebszustand, bei dem die mindestens eine erste Lichtquelle Licht der Lichtfarbe der ersten Lichtfunktion abstrahlt und wenigstens eine zweite Lichtquelle dunkel bleibt,
- ein Betriebszustand, bei dem die mindestens eine erste Lichtquelle dunkel bleibt und wenigstens eine zweite Lichtquelle Licht der Lichtfarbe der ersten Lichtfunktion abstrahlt,
- ein Betriebszustand, bei dem die mindestens eine erste Lichtquelle dunkel bleibt und wenigstens eine zweite Lichtquelle Licht der Lichtfarbe der zweiten Lichtfunktion abstrahlt.

Durch eine Variation der Anzahl der in Betrieb versetzten und dunkel verbleibenden Lichtquellen ergeben sich darüber hinaus weitere denkbare Betriebszustände.

Die mindestens eine erste Lichtquelle ist durch wenigstens eine OLED gebildet, die wie eingangs beschrieben aufgebaut sein kann.

Die mindestens eine zweite Lichtquelle ist durch wenigstens einen kurz als OLED-Stapel bezeichneten Stapel OLEDs gebildet.

Ein OLED-Stapel besteht aus mehreren, mindestens jedoch einer der Anzahl der unterschiedlichen Lichtfarben aller von dem Leuchtmittel zu erfüllender Lichtfunktionen entsprechenden Zahl von übereinander angeordneten Stapellagen, je mindestens eine Stapellage zur Lichtemission einer Lichtfarbe.

Jede Stapellage eines OLED-Stapels ist in der Lage, genau eine Grundfarbe abzustrahlen. Die Stapellagen eines OLED-Stapels sind gemeinsam in der Lage, Licht in einer Anzahl verschiedener Grundfarben abzustrahlen, welche erforderlich sind, damit der OLED-Stapel die zur Erfüllung der von den verschiedenen Lichtfunktionen der Fahrzeugleuchte benötigten unterschiedlichen Lichtfarben abstrahlen kann.

Beispielsweise kann eine RGB- (Rot-Grün-Blau) oder RGBY- (Rot-Grün-Blau-Gelb) Farbmischung in einem OLED-Stapel vorgesehen sein. Jede Stapellage ist jeweils für die Emission einer Farbe zuständig. Durch die sich daraus ergebenden Farbmischung in vertikaler Richtung können somit in den einzelnen durch je einen OLED-Stapel gebildeten dezidierten Flächenabschnitten der Darstellungsfläche jeweils eine Vielzahl an Farben dargestellt werden. Das schließt auch die Änderung einer Lichtfunktion farbgleicher dezidierter Flächenabschnitte durch die Anpassung der erzeugten Leuchtdichte ein, so dass z. B. eine auf einem oder mehreren dezidierten Flächenabschnitten der Darstellungsfläche dargestellte Schlusslichtfunktion durch Erhöhung der angelegten Spannung und/oder des Stroms in eine Bremslichtfunktion umgewandelt werden kann.

Ist ein Leuchtmittel für eine Fahrzeugleuchte beispielsweise ausschließlich dafür ausgelegt, Lichtfunktionen mit gelber und roter Lichtfarbe zu erfüllen, so können je OLED-Stapel Stapellagen genügen, welche als Grundfarben gelbes und rotes Licht abstrahlen. Kommt bei einer anderen Fahrzeugleuchte anstelle oder zusätzlich zu einer Lichtfunktion mit gelber oder roter Lichtfarbe beispielsweise eine Rückfahrlichtfunktion weißer Lichtfarbe hinzu, so können alternativ oder zusätzlich wahlweise ein oder mehrere zusätzliche Stapellagen vorgesehen sein, welche weißes Licht als Grundfarbe abstrahlen.

Alternativ oder zusätzlich können die Stapellagen eines OLED-Stapels Licht ganz anderer Grundfarben abzustrahlen in der Lage sein, beispielsweise Rot, Grün, Blau, mit welchen Grundfarben sich die benötigten Lichtfarben oder nach belieben Lichtfarben additiv mischen lassen.

Je nach zur Darstellung der von der Fahrzeugleuchte zu erfüllenden Lichtfunktionen unterschiedlicher Lichtfarben benötigter Grundfarben weist damit jeder OLED-Stapel zwei, drei oder mehrere Stapellagen unterschiedlicher Grundfarben auf, wobei grundsätzlich jeder OLED-Stapel mehr als eine Stapellage gleicher Grundfarbe aufweisen kann.

Die vertikale Anordnung der Stapellagen in einem OLED-Stapel erlaubt es, auf eine aufwändige laterale Strukturierung zu verzichten, d. h. es sind keine aufwändigen und teuren Lithographieschritte bzw. Elektrodenstrukturierungen nötig, die für eine Segmentierung von Pixeln bzw. Streifen eingesetzt werden müssen, oder es werden zumindest weniger Lithographieschritte bzw. Elektrodenstrukturierungen benötigt.

Eine Stapellage eines OLED-Stapels umfasst wenigstens mindestens eine zwischen elektrisch leitenden, beispielsweise metallischen Schichten für Anode und Kathode eingeschlossen Emitterschicht einer OLED.

Darüber hinaus kann eine Stapellage eine oder mehrere elektrisch leitenden, beispielsweise metallische Schichten für Anode und/oder Kathode zur Bestromung der mindestens einen Emitterschicht der jeweiligen Stapellage umfassen.

Eine Anode und/oder Kathode einer Stapellage kann dabei als Anode und/oder Kathode einer im OLED-Stapel darüber und/oder darunter liegende Stapellage dienen.

Eine Stapellage kann darüber hinaus eine Deckschicht zum Schutz gegen Wasser, Sauerstoff sowie zum Schutz gegen andere Umwelteinflüsse, wie etwa Kratzbeschädigung und/oder Druckbelastung umfassen. Vorzugsweise handelt es sich hierbei um eine oberste Stapellage im OLED-Stapel.

Eine Stapellage kann darüber hinaus eine Basisschicht zum Schutz gegen Wasser, Sauerstoff sowie zum Schutz gegen andere Umwelteinflüsse, wie etwa Kratzbeschädigung und/oder Druckbelastung umfassen, auf welcher Basisschicht der OLED-Stapel aufgebaut ist. Vorzugsweise handelt es sich hierbei um eine unterste Stapellage im OLED-Stapel. Die Basisschicht kann beispielsweise als eine Substratschicht ausgeführt sein.

Alternativ oder zusätzlich können eine gemeinsame Deck- und/oder Basisschicht für mehrere oder alle einen zweiten Teil der leuchtenden Fläche bildenden OLED-Stapel vorgesehen sein.

Zusammengefasst ergibt sich hierdurch in einem OLED-Stapel eine vertikale Anordnung von übereinander angeordneten, durch je eine Stapellage gebildeten OLEDs, von denen je mindestens eine Stapellage zur Lichtemission einer Lichtfarbe wenigstens einer Lichtfunktionen der Fahrzeugleuchte vorgesehen ist.

Jeder OLED-Stapel ist dadurch in der Lage, Licht in allen zur Erfüllung der Lichtfunktionen der Fahrzeugleuchte benötigten Lichtfarben zu erzeugen und abzustrahlen.

Jeder OLED-Stapel bildet dabei zumindest einen Abschnitt des zweiten Teils der leuchtenden Fläche des Leuchtmittels.

Wichtig ist hervorzuheben, dass eine gemeinsame Deck- und/oder Basisschicht für alle die leuchtende Fläche bildenden eine oder mehrere OLEDs und eine oder mehrere OLED-Stapel vorgesehen sein kann.

Die Erfindung schafft eine Verbesserung der Sicht- und Wahrnehmbarkeit von Lichtfunktionen einer beispielsweise als Heckleuchte für ein Kraftfahrzeug ausgebildeten Fahrzeugleuchte durch eine Segmentierung einer von Lichtquellen für wenigstens zwei Lichtfunktionen gebildeten leuchtenden Fläche in mehrere Flächenanbschnitte, die zumindest einen ersten Teil und einen zweiten Teil der leuchtenden Fläche bilden.

Wenigstens ein Teil aller Flächenabschnitte bestehen hierzu aus vertikalen OLED-Stapeln, die wiederum aus mehreren übereinander angeordneten Stapellagen bestehen, je mindestens eine Stapellage zur Lichtemission einer Lichtfarbe. Die verbleibenden Flächenabschnitte sind durch OLEDs mit nur einer lichtemittierenden Stapellage gebildet, welche damit Licht nur einer ersten Lichtfarbe abzustrahlen in der Lage sind. Die OLED-Stapel sind in der Lage, Licht sowohl der ersten Lichtfarbe, als auch zumindest einer zweiten Lichtfarbe abzustrahlen.

Dadurch kann die gesamte leuchtende Fläche zur Darstellung einer ersten Lichtfunktion der ersten Lichtfarbe verwendet werden, wohingegen ein durch die Flächenabschnitte der OLED-Stapel gebildeter Teil der Leuchtfläche zusätzlich für mindestens eine weitere Lichtfunktion mit einer zweiten Lichtfarbe verwendet werden kann. Dadurch kann beispielsweise ein verstecktes Lichtzeichen, wie etwa ein Schriftzug verwirklicht werden, oder eine dynamische Lichtfunktion, beispielsweise eine Wischfunktion für eine Wiederholblinklichtfunktion durch Zuschaltung einer steigenden Zahl von OLED-Stapeln, welche Licht einer zweiten Lichtfarbe einer zweiten Lichtfunktion bei deren Bedarf abstrahlen.

Anhand einer entsprechenden Ansteuerung kann mittels des beschriebenen Leuchtmittels beispielsweise eine Prä- und/oder Postfahr-Assistenzfunktion durch Mehrfachverwendung einer in ihrer Gesamtheit für eine erste Lichtfunktion vorgesehenen, entsprechend aufgebaute leuchtende Fläche verwirklicht werden, welche einem Benutzer eines Fahrzeugs vor und/oder nach einer Fahrt Informationen über den Zustand des Fahrzeugs anzeigt, ohne dass sich dieser im Fahrzeug befinden muss.

Um beispielsweise einen Füllstand eines Energiespeichers eines Kraftfahrzeugs, wie beispielsweise eines Kraftstofftanks und/oder einer Fahrbatterie abzufragen, muss bis dato im Fahrzeug Platz genommen werden.

In Verbindung beispielsweise mit mit anderen Benutzern geteilten Fahrzeugen, wie etwa Car-Sharing-Fahrzeugen, Mietfahrzeugen, Elektrofahrzeugen, aber auch bei der alleinigen Nutzung von Fahrzeugen durch nur einen Benutzer ergibt sich immer die Notwendigkeit, sich in das Fahrzeug zu setzen, um Informationen zu erhalten, die Aufschluss beispielsweise über die mit dem Fahrzeug zurücklegbare Strecke geben.

Das Leuchtmittel in Verbindung mit einer entsprechenden Ansteuerung schafft hier Abhilfe, indem eine oder mehrere zur Erfüllung einer oder mehrerer Lichtfunktionen einer Fahrzeugleuchte vorgesehene, vorzugsweise zweite Lichtquellen verwendet werden, um bei einer Annäherung eines Benutzers an ein Fahrzeug - sei es automatisch oder durch ein Signal des Benutzers - oder permanent oder in Zyklen, entsprechende von einem Benutzer erkennbare Lichtsignale an die Umgebung abgibt, aus denen der Benutzer die gewünschten Informationen ableiten kann.

Grundsätzlich kann eine vermittels einer oder mehreren zweiten Lichtquellen erfüllte zweite Lichtfunktion zur Abgabe entsprechender Lichtsignale vorgesehen sein.

So kann beispielsweise die Abgabe grünen Lichts bei der Annäherung oder dem Entfernen eines Benutzers eine zumindest innerhalb einer zu erwartenden Nutzung volle Verfügbarkeit des Fahrzeugs signalisieren, wohingegen ein rotes Aufleuchten den Bedarf des Nachtankens oder Aufladens des Energiespeichers anzeigen kann.

Vorteile ergeben sich insbesondere bei der abwechselnden Nutzung von Fahrzeugen durch mehrere Benutzer, wodurch vor Fahrtantritt auf einfache Weise ein voll verfügbares Fahrzeug ausgewählt werden kann.

Denkbar ist in diesem Zusammenhang auch eine Speicherung benutzertypischen Verhaltens, wie beispielsweise durchschnittlich und/oder die letzten Fahrzyklen zurückgelegten Wegstrecken und/oder der wochentagstypisch zurückgelegten Wegstrecke, welches bei der Anzeige Berücksichtigung findet.

Technische Vorteile ergeben sich unter Anderem durch eine Reduktion unbeabsichtigt verbrauchter unvollständiger Ladezyklen bei Miet-Elektrofahrzeugen.

Das Leuchtmittel kann mit mehreren, beispielsweise nebeneinander angeordneten, zur Erfüllung einer zweiten Lichtfunktion vorgesehenen zweiten Lichtquellen ausgeführt sein. In Verbindung mit einer Ansteuerung für die einzelnen zweiten Lichtquellen kann ein Wisch- und/oder Lauflichteffekt verwirklicht werden. Der Lauflichteffekt ist hierbei permanent durchlaufend ausgestaltet, wobei zuerst eingeschaltete zweite Lichtquellen bereits wieder erlöschen, während noch andere zweite Lichtquellen eingeschaltet werden. Der Wischeffekt hingegen sieht vor, dass die einzelnen zweiten Lichtquellen von einem beispielsweise seitlichen Rand des zweiten Teils der leuchtenden Fläche her nacheinander eingeschaltet werden bis alle zweiten Lichtquellen leuchten und/oder ausgehend vom Betrieb aller zweiter Lichtquellen beispielsweise von dem selben, beispielsweise seitlichen Rand des zweiten Teils der leuchtenden Fläche ausgehend nacheinander ausgeschaltet werden.

Der Wischeffekt und/oder der Lauflichteffekt können während des beispielsweise einmaligen oder wiederholten Ein- und/oder Ausschaltens der zweiten Lichtfunktion auftreten. Ein einmaliges Ein- und Ausschalten liegt beispielsweise für die Bremslichtfunktion bei einem Bremsvorgang vor. Ein wiederholtes Ein- und Ausschalten bei Betrieb einer einer Fahrtrichtungsanzeige dienenden Wiederholblinklichtfunktion.

Unabhängig von der Wahl der Ausführung des Lauflichteffekts und/oder des Wischeffekts wird hierdurch die Aufmerksamkeit - obgleich es sich nur um Bruchteile von Sekunden beim verzögerten Ein- und/oder Ausschalten handelt - unweigerlich auf die zweite Lichtfunktion gelenkt, so dass diese - obgleich diese niemals wie die erste Lichtfunktion die volle leuchtende Fläche einnimmt - ebenfalls verstärkt wahrgenommen wird. Dadurch ist die Wahrnehmung nicht nur der bei alleiniger momentaner Verwendung die vollständige leuchtende Fläche einnehmenden ersten Lichtfunktion, sondern auch der zweiten Lichtfunktion verstärkt, was die Aufmerksamkeit auf beide Lichtfunktionen gleichermaßen lenkt, und dadurch einer Erhöhung der Verkehrssicherheit beiträgt.

Die Erfindung kann außerdem mittels einer mit einem zuvor beschriebenen Leuchtmittel ausgestatteten Fahrzeugleuchte verwirklicht werden.

Die Fahrzeugleuchte kann einen im Wesentlichen von einem Leuchtengehäuse und einer Lichtscheibe zumindest teilweise umschlossenen Leuchteninnenraum aufweisen, in dem das Leuchtmittel beherbergt sein kann.

Alternativ kann die leuchtende Fläche zumindest einen Teil einer Lichtscheibe bilden und/oder in eine Lichtscheibe beispielsweise integriert sein.

Eine zusätzliche Variationsmöglichkeit ergibt sich dadurch, dass die leuchtende Fläche in einen von außerhalb des Leuchteninnenraums beim Blick durch die Lichtscheibe hindurch sichtbaren Teil des Leuchtengehäuses beispielsweise integriert sein kann.

Die Fahrzeugleuchte ist bevorzugt als eine Heckleuchte für ein Kraftfahrzeug ausgebildet.

Die Fahrzeugleuchte kann einzelne Merkmale oder eine beliebige Kombination von zwei oder mehreren Merkmalen eines zuvor beschriebenen Leuchtmittels aufweisen, ebenso wie das Leuchtmittel einzelne Merkmale oder eine beliebige Kombination von zwei oder mehreren Merkmalen einer zuvor beschriebenen Fahrzeugleuchte aufweisen kann.

Das Leuchtmittel und/oder die Fahrzeugleuchte kann zur Verwirklichung einzelner Merkmale oder einer beliebigen Kombination von zwei oder mehreren Merkmalen eines zuvor beschriebenen Verfahrens vorgesehene Einrichtungen aufweisen.

Alternativ oder zusätzlich können das Verfahren und/oder das Leuchtmittel und/oder die Fahrzeugleuchte einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen.

Ebenso wie die Fahrzeugleuchte es erlaubt, die Vorteile des Verfahrens zu nutzen, erlaubt auch das Leuchtmittel, sämtliche Vorteile des Verfahrens nutzbar zu machen.

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:
- Fig. 1: verschiedene Ausführungsbeispiele von zur Ausführung eines erfindungsgemäßen Verfahrens geeigneten Lichtsignalen einer in mehrere Teilflächen unterteilten, zur Abgabe eines oder mehrerer Lichtsignale vorgesehenen leuchtenden Fläche.
- Fig. 2: verschiedene Ausführungsbeispiele von zur Ausführung eines erfindungsgemäßen Verfahrens geeigneten Lichtsignalen einer zur Abgabe eines oder mehrerer Lichtsignale vorgesehenen leuchtenden Fläche.
- Fig. 3: ein erstes Ausführungsbeispiel eines zur Ausführung eines erfindungsgemäßen Verfahrens geeigneten Leuchtmittels in einer Draufsicht auf dessen bei Betrieb der Lichtquellen leuchtende Fläche.
- Fig. 4: ein zweites Ausführungsbeispiel eines zur Ausführung eines erfindungsgemäßen Verfahrens geeigneten Leuchtmittels in einer Draufsicht auf dessen bei Betrieb der Lichtquellen leuchtende Fläche.
- Fig. 5: einen wenigstens einen Flächenabschnitt eines zweiten Teils der leuchtenden Fläche eines zur Ausführung eines erfindungsgemäßen Verfahrens geeigneten Leuchtmittels bildenden OLED-Stapel in einem Querschnitt.

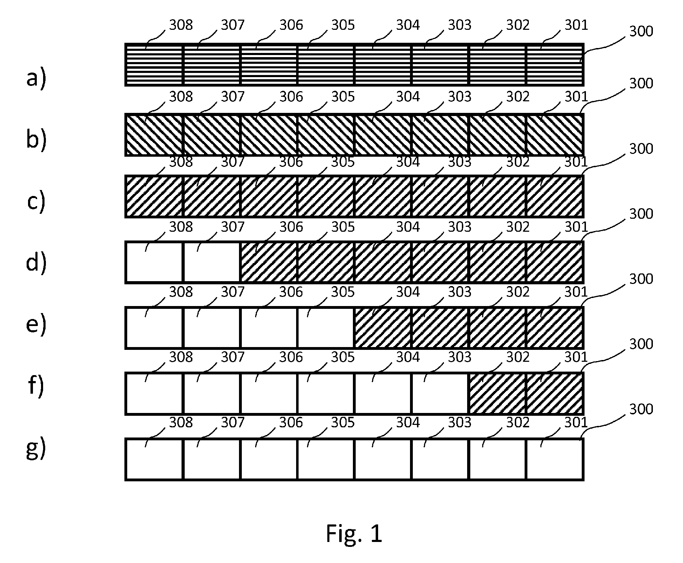

Ein in Fig. 1, Fig. 2, Fig. 3, Fig. 4 in seiner Erzeugung eines oder mehrerer Lichtsignale ganz oder teilweise dargestelltes Verfahren zur Erzeugung einer Prä- und/oder Postfahrassistenzfunktion eines Fahrzeugs durch Betrieb mindestens einer Lichtquelle wenigstens eines Leuchtmittels zumindest einer Fahrzeugleuchte des Fahrzeugs sieht die Erzeugung eines oder mehrerer zur Anzeige einer Prä- und/oder Postfahrassistenzfunktion dienender Lichtsignale vor, die durch Betrieb mindestens einer Lichtquelle wenigstens eines Leuchtmittels zumindest einer Fahrzeugleuchte erhalten werden, so dass durch den Betrieb mindestens einer Lichtquelle wenigstens eines Leuchtmittels zumindest einer Fahrzeugleuchte mindestens ein Lichtsignal erzeugt wird, das der Erfüllung der Prä- und/oder Postfahrassistenzfunktion dient.

Die durch ein oder mehrere Lichtsignale einer oder mehrerer Fahrzeugleuchten erfüllte Prä- und/oder Postfahr-Assistenzfunktion zeigt einem Benutzer eines Fahrzeugs vor und/oder nach einer Fahrt Informationen über den Zustand des Fahrzeugs an, ohne dass sich der Benutzer im Fahrzeug befindet.

Um beispielsweise einen Füllstand eines Energiespeichers eines Kraftfahrzeugs, wie beispielsweise eines Kraftstofftanks und/oder einer Fahrbatterie abzufragen, muss bis dato im Fahrzeug Platz genommen werden.

In Verbindung beispielsweise mit mit anderen Benutzern geteilten Fahrzeugen, wie etwa Car-Sharing-Fahrzeugen, Mietfahrzeugen, Elektrofahrzeugen, aber auch bei der alleinigen Nutzung von Fahrzeugen durch nur einen Benutzer ergibt sich bislang immer die Notwendigkeit, sich in das Fahrzeug zu setzen, um Informationen zu erhalten, die Aufschluss beispielsweise über die mit dem Fahrzeug zurücklegbare Strecke geben.

Die Erfindung schafft hier Abhilfe, indem eine oder mehrere Lichtquellen eines oder mehrerer zur Erfüllung einer oder mehrerer Lichtfunktionen einer Fahrzeugleuchte vorgesehene Leuchtmittel verwendet werden, um bei einer Annäherung eines Benutzers an ein Fahrzeug - sei es automatisch oder durch ein Signal des Benutzers - oder permanent oder in Zyklen, entsprechende, von einem Benutzer erkennbare Lichtsignale an die Umgebung abgeben, aus denen der Benutzer die gewünschten Informationen ableiten kann.

Eine bevorzugte Ausgestaltung des Verfahrens kann eine Mehrfachverwendung einer oder mehrerer zur Erfüllung wenigstens einer Lichtfunktion zumindest einer Fahrzeugleuchte vorgesehener Lichtquellen zur Erzeugung mindestens eines Lichtsignals zur Erfüllung eine Prä- und/oder Postfahrassistenzfunktion vorsehen. Mindestens ein zur Erfüllung der Prä- und/oder Postfahrassistenzfunktion vorgesehenes Lichtsignal weist hierbei eine Lichtfarbe auf, wie sie ohnehin zur Erfüllung der von einer Fahrzeugleuchte erfüllbaren, im Straßenverkehr beispielsweise gesetzlich vorgeschriebenen Lichtfunktionen notwendig ist.

Ein mindestens ein zur Erfüllung der Prä- und/oder Postfahrassistenzfunktion vorgesehenes Lichtsignal kann hierbei eine für eine bestimmte Lichtfunktion beispielsweise im Straßenverkehr gesetzlich vorgeschriebene Lichtverteilung aufweisen.

Eine alternative oder zusätzliche bevorzugte Ausgestaltung des Verfahrens kann wenigstens eine eigens zur Erfüllung mindestens eines der Prä- und/oder Postfahrassistenzfunktion dienenden Lichtsignals vorgesehene Lichtquelle zumindest eines Leuchtmittels wenigstens einer Fahrzeugleuchte vorsehen.

Eine solche, eigens zur Erfüllung eines der Prä- und/oder Postfahrassistenzfunktion dienenden Lichtsignals vorgesehene Lichtquelle kann eine Lichtfarbe aufweisen, wie sie zur Erfüllung der beispielsweise im Straßenverkehr gesetzlich vorgeschriebenen Lichtfunktionen einer Fahrzeugleuchte nicht notwendig ist, beispielsweise grün.

Ein solches, beispielsweise unter Zuhilfenahme eines lichtfarbenmischenden Lichtleiters erzeugtes, eigens zur Erfüllung der Prä- und/oder Postfahrassistenzfunktion dienendes Lichtsignal kann grundsätzlich ebenfalls eine für eine bestimmte Lichtfunktion im Straßenverkehr gesetzlich vorgeschriebene Lichtverteilung aufweisen.

Eine besonders bevorzugte Ausgestaltung des Verfahrens sieht vor, dass das mindestens eine der Erfüllung der Prä- und/oder Postfahrassistenzfunktion dienende Lichtsignal durch eine veränderliche und/oder vorgegebene Lichtfarbe - beispielsweise ähnlich einer Ampel - und/oder eine veränderliche und/oder vorgegebene Wiederholsequenz - beispielsweise ähnlich einem Identifikationscode eines Seezeiches, etwa einem Leuchtturm - und/oder durch eine veränderliche und/oder vorgegebene Leuchtfläche - beispielsweise ähnlich einer visuellen Füllstandsanzeige beispielsweise einer Tankuhr oder eines Akkumulators - eine eindeutige Information über die Verfügbarkeit und/oder Fahrbereitschaft und/oder Reichweite eines Fahrzeugs abgibt.

So kann beispielsweise die Abgabe eines Lichtsignals grünen Lichts bei der Annäherung oder dem Entfernen eines Benutzers eine zumindest innerhalb einer zu erwartenden Nutzung volle Verfügbarkeit des Fahrzeugs signalisieren, wohingegen ein rotes Aufleuchten durch die Abgabe eines Lichtsignals roten Lichts den Bedarf des Nachfüllens, beispielsweise Nachtankens oder Aufladens eines Energiespeichers des Fahrzeugs anzeigen kann.

Das Verfahren kann vorsehen, eine Annäherung eines Benutzers an ein Fahrzeug zu erfassen und/oder zu überwachen und bei erfasster und/oder erkannter Annäherung eine Präfahrassistenzfunktion durch Abgabe wenigstens eines Lichtsignals zu erzeugen.

Das Verfahren kann vorsehen, eine bestimmte Frequenz oder ein bestimmtes Frequenzband elektromagnetischer Wellen zu überwachen, auf welcher Frequenz und/oder innerhalb welchen Frequenzbands ein Signal von einem Benutzer eines Fahrzeugs beispielsweise durch Veränderung der Permittivität veränderbar ist und/oder beispielsweise mittels einer geeigneten Sendeeinrichtung, beispielsweise mittels einer Infrarot und/oder Funkfernbedienung und/oder Netzwerkverbindung - etwa einer solchen, wie sie heutzutage in Verbindung mit Fahrzeugschlüsseln zum fernbedienbaren Öffnen und Abschließen eines Fahrzeugs, oder von mit Mobiltelefonen koppelbaren Freisprecheinrichtungen in Fahrzeugen bekannt sind, erzeugbar ist, und bei verändertem und/oder empfangenem Signal eine Präfahrassistenzfunktion durch Abgabe wenigstens eines Lichtsignals zu erzeugen.

Das Verfahren kann vorsehen, in regelmäßigen Abständen und/oder durch ein von einem Benutzer auslösbares Ereignis gesteuert, beispielsweise durch eine Betätigung eines Türgriffs, und/oder innerhalb eines durch einen Eigentümer des Fahrzeugs vorgegebenen Zeitfensters, - beispielsweise ähnlich einem schlüssellosen Zugang zu einem Fahrzeug und/oder einem Funketikett - eine bestimmte Frequenz oder ein bestimmtes Frequenzband elektromagnetischer Wellen zu erzeugen, welche durch Interaktion mit einer von einem Benutzer eines Fahrzeugs mitzuführenden Identifikationseinrichtung eine Antwort ebenfalls in Form elektromagnetischer Wellen erzeugt, die wiederum erfasst wird oder erfassbar ist, und bei erfasster Antwort eine Präfahrassistenzfunktion durch Abgabe wenigstens eines Lichtsignals zu erzeugen.

Umgangssprachlich auch Funketiketten genannt, stellt RFID (radio-frequency identification) eine Technologie für Sender-Empfänger-Systeme zum automatischen und berührungslosen Identifizieren und Lokalisieren von Gegenständen, wie beispielsweise Artikeln vermittels Radiowellen dar. Sie erleichtert das Erfassen von Daten erheblich.

Ein RFID-System besteht aus dem RFID-Tag, welches sich an oder in einem Gegenstand befindet und in dessen Speicher zumindest einen kennzeichnenden Code enthält, sowie einem Lesegerät zum Auslesen dieser Kennung.

Die Kopplung geschieht durch vom Lesegerät erzeugte elektromagnetische Wechselfelder geringer Reichweite oder durch hochfrequente Radiowellen. Damit werden nicht nur Daten übertragen, sondern auch das RFID-Tag mit Energie versorgt.

Informationen können direkt auslesbar im Speicher des RFID-Tags abgelegt sein, oder sie können auf mindestens einem Server und/oder in mindestens einer Datenbank abgelegt und vermittels des im Speicher des RFID-Tags abgelegten Codes identifizierbar und dadurch mindestens einem Artikel zugeordnet sein.

Eine Anzeige einer Präfahrassistenzfunktion durch Erzeugung eines Lichtsignals kann beispielsweise nur dann erfolgen, wenn der Benutzer sich mit seinem Schlüssel dem Fahrzeug nähert, etwa wie bei Keyless-Systemen, die aktuell für ein Öffnen des Fahrzeugs und ein Starten des Motors ohne Zündschloss verwendet werden. Dies spart Energie in der Zeit, in der niemand das Fahrzeug anschaut oder sich in dessen Nähe befindet.

Alternativ oder zusätzlich kann das Verfahren vorsehen, das Verlassen eines Fahrzeugs durch einen Benutzer des Fahrzeugs zu überwachen, beispielsweise anhand einer Sitzbelegungserkennung und/oder einem Öffnen und anschließendem Schließen einer Fahrzeugtür nach einer Benutzung des Fahrzeugs, und nach erfasstem und/oder erkanntem Verlassen des Fahrzeugs eine Postfahrassistenzfunktion durch Abgabe wenigstens eines Lichtsignals zu erzeugen.

Das Verfahren kann eine Vorgabe der Anforderungen eines Benutzers an ein Fahrzeug vorsehen, wobei ein Benutzer beispielsweise vermittels eines Mobiltelefons seine Anforderungen an ein Fahrzeug vorgeben kann, wobei die Prä -und/oder Postfahrassistenzfunktion durch Abgabe entsprechender Lichtsignale vorsieht, dass entweder exakt diesen Anforderungen genügende Fahrzeuge durch Abgabe entsprechender Lichtsignale deren Verfügbarkeit signalisieren, oder solche Fahrzeuge durch Abgabe entsprechender Lichtsignale deren Verfügbarkeit signalisieren, die zumindest die Anforderungen des Benutzers erfüllen, demnach auch weit höheren Anforderungen genügen.

Eine besonders vorteilhafte Ausgestaltung des Verfahrens kann eine Speicherung benutzertypischen Verhaltens vorsehen, wie beispielsweise durchschnittliche und/oder während der letzten Fahrzyklen zurückgelegte Wegstrecken und/oder der wochentagstypisch zurückgelegten Wegstrecken, welches bei der Erzeugung der Prä- und/oder Postfahrassistenzfunktion durch Abgabe eines oder mehrerer Lichtsingale Berücksichtigung findet.

Denkbar ist beispielsweise, dass die Anzeige der Prä- und/oder Postfahrassistenzfunktion durch Abgabe eines oder mehrerer Lichtsingale an mindestens einer Fahrzeugleuchte dem Benutzer für eine bevorstehende Fahrt eine voraussichtliche Fahrzeugzustandsrückmeldung gibt. Wenn der Benutzer des Fahrzeugs montags bis freitags zur Arbeit fährt und hier jeweils 25 km fährt und der Tank des Fahrzeugs dies ohne Probleme zulässt (z. B. Füllstand: i. O. für 75 km), kann dem Benutzer eine positive Rückmeldung gegeben werden.

Sollte der Benutzer in einem anderen Fall diese Abfrage aber am Wochenende machen und er fährt normalerweise am Wochenende zu seinem 150 km entfernten Zweitwohnsitz, so könnte das Fahrzeug ihm abhängig vom Tankfüllstand (z. B. Füllstand: i. O. für 75 km) hier eine negative Rückmeldung geben, so dass der Benutzer weiß, dass er zuvor noch tanken oder das Fahrzeug laden muss.

Denkbar ist also, dass eine hierzu verbaute Fahrzeugelektronik von den Fahrgewohnheiten und den berechneten Durchschnittsverbräuchen in Abhängigkeit vom Datum lernt und hierauf ihre Anzeige abstimmt.

Auch ist eine Kopplung mit einem Kalender, beispielsweise mittels Bluetooth-Verbindung zu einem Mobiltelefon und/oder Tablet des Fahrzeugbenutzers denkbar, aus dem die Distanz zum nächsten Termin oder der nächsten Termine an diesem oder dem kommenden Tag berechnet und somit der voraussichtliche Energieverbrauch für das Fahrzeug vorherbestimmt werden kann.

Vorteile ergeben sich insbesondere bei der abwechselnden Nutzung beispielsweise einer Flotte von Fahrzeugen durch mehrere Benutzer, wodurch vor Fahrtantritt auf einfache Weise ein den anstehenden Bedürfnissen eines Benutzers entsprechendes Fahrzeug aus der Flotte ausgewählt werden kann.

Bei Leihfahrzeugen, beispielsweise wenn mehrere Fahrzeuge nebeneinander stehen, kann eine Präfahrassistenzfunktion durch ein beispielsweise permanentes Aufleuchten von Lichtsignalen in rot, grün oder gelb, oder in einer andere Darstellungsform, einem herannahenden Benutzer, etwa einem möglichem Fahrzeugmieter, anzeigen, welches der Fahrzeuge geladen ist und welches nicht. Daraus ergibt sich für ihn das leichte Auswählen des Fahrzeugs, nämlich desjenigen, das beispielsweise den höchsten Batterieladezustand aufweist, etwa angezeigt durch ein grünes Lichtsignal. Wie beschrieben kann die Anzeige auch hier je nach voraussichtlichem Standard-Fahrziel angepasst sein und/oder anhand eines gespeicherten Verhaltens des Benutzers, wie etwa dessen Fahrgewohnheiten, wie etwa Standard-Stadtfahrten.

So genügt einem Benutzer, der eine kurze Wegstrecke zurückzulegen hat ein nur teilweise gefüllter Energiespeicher, wohingegen derjenige Benutzer, der eine weite Strecke zurückzulegen hat, ein Fahrzeug mit vollem Energiespeicher auswählen kann.

Technische Vorteile ergeben sich unter Anderem durch eine Reduktion unbeabsichtigt verbrauchter unvollständiger Ladezyklen bei Privat- sowie Miet-Elektrofahrzeugen.

Wichtig ist hervorzuheben, dass das Verfahren beispielsweise geeignet ist, Personen, wie beispielsweise Fahrern, potentiellen Fahrern, Angestellten von Mietwagenfirmen, die Möglichkeit zu geben, den Status eines Fahrzeuges, wie etwa Batterieladezustand, Tankfüllzustand, allgemeine Fahrbereitschaft des Fahrzeugs, Fahrzeug ist ordnungsgemäß abgeschlossen/verriegelt, sowie beispielsweise einen individuell konfigurierbaren Zustand, wie beispielsweise Motorwärme, der Leuten außen am Fahrzeug angezeigt werden kann und soll, anhand eines oder mehrerer Lichtsignale ähnlich einer Lichtfunktion einer Fahrzeugleuchte darzustellen. Dabei wird nicht zwingend eine zusätzliche Leuchtkammer oder ein zusätzlicher Lichtleiter in einer Fahrzeugleuchte benötigt, sondern ein bestehendes System kann mehrfach verwendet werden. Dieses mehrfache Verwenden kann beispielsweise durch Lichtmischung mehrerer Lichtquellen, wie etwa LEDs und OLEDs mit mehreren OLED-Stapel übereinander erfolgen, die so unterschiedliche Farben an einer Lichtaustrittsfläche erzeugen können und/oder durch gesteuertes Aufleuchtenlassen einer oder mehrerer Lichtquellen beispielsweise auch mit Hilfe von speziellen Farben und/oder anhand von Wiederholblinken und/oder Animation.

Denkbar ist beispielsweise die Bereitstellung eines roten und eines grünen Lichtsignals zur Ladezustandsanzeige eines Elektrofahrzeugs oder analog der Tankfüllung bei einem Fahrzeug mit Verbrennungsmotor vermittels einer ansonsten einer Fahrtrichtungsanzeige dienenden Wiederholblinklichtfunktion, die beim Öffnen und/oder Schließen und/oder bei einer Annäherung an das Fahrzeug aktiviert wird.

Schwellenwerte, oberhalb denen eine positive Verfügbarkeit durch Abgabe mindestens eines entsprechenden Lichtsignals, wie etwa eines Lichtsignals grüner Lichtfarbe, und/oder unterhalb denen eine negative Verfügbarkeit durch Abgabe mindestens eines entsprechenden Lichtsignals, wie etwa eines Lichtsignals roter Lichtfarbe angezeigt wird, können individuell festlegbar sein, beispielsweise anhand einer vom Halter einstellbarer Mindestreichweite, oder ähnlich der Berechnung einer Restreichweitenanzeige und/oder dem Selbstlernen von Automatikgetrieben bezogen auf geleistete Fahrzyklen.

Zur Verwirklichung des Verfahrens kann beispielsweise eine Fahrzeugleuchte mit einem Leuchtmittel mit wenigstens zwei Lichtquellen unterschiedlicher Lichtfarbe vorgesehen sein. Denkbar ist beispielsweise die Verwendung eines Leuchtmittels mit einem farbmischenden Lichtleiter mit mindestens zwei das von ihnen ausgestrahlte Licht in den Lichtleiter einkoppelnden Lichtquellen.

Für eine Zwillingseinkopplung des Lichts zweier Lichtquellen von einer Seite her in einen Lichtleiter beispielsweise mit Y-Form kann beispielsweise eine rote und eine grüne LED verwendet werden. Die Lichtquellen können nun alle Farben zwischen grün und rot an der beispielsweise eine leuchtende Fläche des Leuchtmittels und/oder einer Fahrzeugleuchte bildenden Auskoppelfläche des Lichtleiters erzeugen, einschließlich gelb. Daher kann der Lichtleiter einerseits eine Wiederholblinklichtfunktion erfüllen - andererseits einem potentiellen Benutzer am parkenden Fahrzeug, beispielsweise ähnlich einer auch als Welcome Home Funktion bezeichneten, das Fahrlicht eines Fahrzeugs für eine voreinstellbare Zeitspanne nach dem Abstellen eines zuvor bei Dunkelheit betriebenen Fahrzeugs weiterhin betreibende Postfahrassistenzfunktion, mittels beispielsweise eines blinkenden Lichtsignals roter Lichtfarbe signalisieren, dass die Batterie seines Elektronfahrzeugs geladen werden muss und mittels beispielsweise eines blinkenden Lichtsignals grüner Lichtfarbe signalisieren, dass der Akku voll geladen ist.

Eine entsprechende, zur Verwirklichung des Verfahrens geeignete Fahrzeugleuchte verfügt beispielsweise über eine multifunktionale leuchtende Fläche, indem sie eine multifunktionale Leuchtfunktion beispielsweise mit Hilfe eines Lichtleiters erzeugt.

Ein Erfindungsgedanke ist hierbei, dass eine leuchtende Fläche mehrfach verwendet wird. Hierbei wird eine in einer Fahrzeugleuchte verbaute, beispielsweise zur Erfüllung einer Wiederholblinklichtfunktion vorgesehene leuchtende Fläche mehrfach verwendet, nämlich für die Wiederholblinklichtfunktion und für wenigstens ein eine Prä- und/oder Postfahrassistenzfunktion erfüllendes Lichtsignal. Daher wird der geometrisch eingeschränkte Raum in der Fahrzeugleuchte für die Darstellung von Lichtsignalen nutzbar gemacht, ohne dass zusätzlichen Reflektoren, Optikscheiben oder Lichtleiter sowie gegebenenfalls gesonderte Leiterbahnträger erforderlich sind, wie beispielsweise kurz als Platinen bezeichnete gedruckte Leiterbahnträger (PCB: Printed Circuit Board).

Wie bereits zum Verfahren beschrieben kann dies durch Aufleuchten von unterschiedlichen Farben und/oder Blinken der gesamten leuchtenden Fläche oder von einem oder mehreren Teilen der leuchtenden Fläche sowie einer Animation der einzelnen leuchtenden Flächen oder von Teilen hiervon ausgestaltet sein.

Fig. 1 zeigt in Fig. 1 a), Fig. 1 b), Fig. 1 c), Fig. 1, d), Fig. 1 e), Fig. 1 f), Fig. 1 g) verschiedene, mittels einer durch mehrere, einzeln ansteuerbare, beispielsweise durch einzelne Leuchtenkammern gebildete Teilflächen 301, 302, 303, 304, 305, 306, 307, 308 bestehenden leuchtenden Fläche 300 einer Fahrzeugleuchte darstellbare Lichtsignale.

In Fig. 1 a), Fig. 1 b), Fig. 1 c), Fig. 1, d), Fig. 1 e), Fig. 1 f), Fig. 1 g) stellen unterschiedliche Schraffuren unterschiedliche Lichtfarben dar. Teilflächen 301, 302, 303, 304, 305, 306, 307, 308 ohne Schraffur verbleiben bei der Erzeugung der Prä- und/oder Postfahrassistenzfunktion dunkel.

Die Anzeige beispielsweise eines Tankfüllstandes kann beispielsweise durch ein gesamtheitliches Aufleuchten aller Teilflächen 301, 302, 303, 304, 305, 306, 307, 308 in rot (Fig. 1 a) = leer), gelb (Fig. 1 b) = halbvoll) oder grün (Fig. 1c) = voll) dargestellt werden. Es ist zusätzlich auch möglich die Anzeige durch nur teilweises Aufleuchten der Teilflächen 301, 302, 303, 304, 305, 306, 307, 308 darzustellen.

Ein halbvoller Tank oder Energiespeicher kann beispielsweise wie in Fig. 1 e) dargestellt angezeigt werden, wohingegen ein dreiviertel voller Tank oder Energiespeicher wie in Fig. 1 d) dargestellt angezeigt werden kann und/oder ein dreiviertel leerer Tank oder Energiespeicher wie in Fig. 1 f) dargestellt angezeigt werden kann.

Das Verfahren kann eine Animation der Prä- und/oder Postfahrassistenzfunktion vorsehen, beispielsweise indem in Fig. 1 zunächst erst die Teilfläche 301 ganz rechts außen aufleuchtet, einige Millisekunden später die links benachbarte Teilfläche 302 und so weiter, bis bei vollem Tank oder Energiespeicher und/oder bei voller Verfügbarkeit des Fahrzeugs und/oder Erfüllbarkeit der Benutzeranforderungen schließlich die am weitesten links liegende Teilfläche 308 von rechts her kommend aufleuchten oder eine dem anzuzeigenden Zustand entsprechende Teilfläche zwischen der ersten Teilfläche 301 ganz rechts und der letzten Teilfläche 308 ganz links aufleuchtet.

Auch ein Blinken einzelner Teilflächen 301, 302, 303, 304, 305, 306, 307, 308 oder der ganzen leuchtenden Fläche 300 ist möglich.

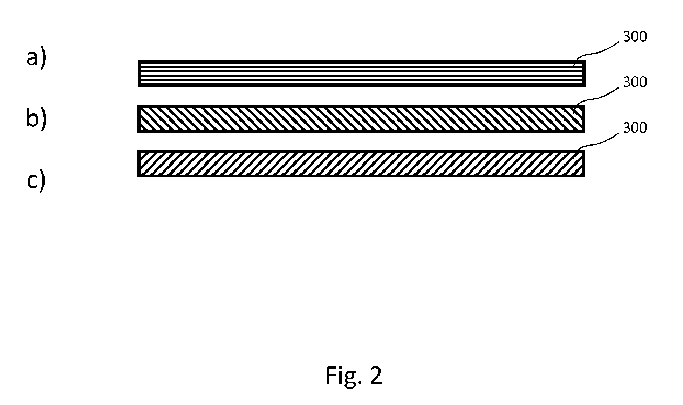

Bei einer nicht in Teilflächen 301, 302, 303, 304, 305, 306, 307, 308 unterteilten, beispielsweise durch nur eine einzige Leuchtenkammer oder einen Lichtleiter gebildeten leuchtenden Fläche 300 kann die Erzeugung der Prä- und/oder Postfahrassistenzfunktion durch Anzeige eines oder mehrerer Lichtsignale wie in Fig. 2 dargestellt über verschiedene Lichtfarben und/oder zeitliche Lichtfarbübergangsverläufe und/oder Blinken erfolgen. Fig. 2 stellt dies durch Lichtsignale unterschiedlicher Lichtfarben in Fig. 2 a), Fig. 2 b) und Fig. 2 c) dar, wobei die unterschiedlichen Schraffuren unterschiedliche Lichtfarben darstellen sollen.

Ist eine leuchtende Fläche 300 oder eine Teilfläche 301, 302, 303, 304, 305, 306, 307, 308 einer leuchtenden Fläche 300 durch einen Lichtleiter verwirklicht, so kann die Lichteinkopplung in den Lichtleiter beispielsweise über eine Y-förmige Verzweigung des Lichtleiters erfolgen. An die beiden jeweils zur Einkopplung einer Lichtfarbe vorgesehenen Arme schließt sich nachfolgend ein Lichtfarbmischbereich und an diesen dann ein Lichtauskoppelbereich an. Auch sind mehrfach Y-Einkopplungen denkbar beispielsweise für eine oder mehrere rote, grüne und blaue LEDs.

Auch sind weiterhin Multi-Chip LEDs einsetzbar, deren Vorteil darin besteht, dass die Lichtmischung im Lichtleiter einfach erfolgen kann und keine zusätzlich angeformten Einkoppelbereiche am Lichtleiter nötig sind. Dadurch kann auf eine beispielhaft beschriebene Y-förmige Geometrie verzichtet werden. Bei Multi-Chip LEDs liegen die Brennpunkte der einzelnen, jeweils Licht unterschiedlicher Lichtfarbe abstrahlenden Lichtquellen sehr eng beieinander, wodurch die Lichtverteilung einer leuchtenden Fläche 300 und/oder Teilfläche 301, 302, 303, 304, 305, 306, 307, 308 unabhängig von der erzeugten Lichtfarbe nahezu identisch ist.

Das Verfahren ermöglicht eine Kommunikation eines Fahrzeugs über eine hieran angebrachte Fahrzeugleuchte mit außenstehenden Personen. Ein Benutzer kann sich auf die bevorstehende Reise mit seinem Fahrzeug frühzeitig einstellen und gegebenenfalls reagieren, bevor er im Fahrzeug sitzt. Er kann beispielsweise seinen Gelbbeutel für das Tanken noch aus dem Haus holen, wenn sein Fahrzeug ihm für die bevorstehende Reise eine ungenügende Tankfüllung oder einen ungenügenden Ladezustand des Energiespeichers anzeigt, noch bevor er die Zündung eingeschaltet hat.

Auch wird für dies Anzeige der Prä- und/oder Postfahrassistenzfunktion keine zusätzlich am Fahrzeug angebrachte Fahrzeugleuchte nötig. Weiterhin werden auch keine zusätzlichen leuchtenden Flächen in den vorhanden Fahrzeugleuchten benötigt, die sich gegebenenfalls negativ auf den Bauraumbedarf der Fahrzeugleuchten und das äußere Erscheinungsbild des Fahrzeugs auswirken könnten. Das zur Anzeige der Prä- und/oder Postfahrassistenzfunktion dienende Lichtsignal kann durch eine Mehrfachverwendung eines zur Erfüllung einer Lichtfunktion der Fahrzeugleuchte vorgesehenen Leuchtmittels und dessen leuchtender Fläche verwirklicht werden, beispielsweise durch unterschiedliche Anzeigemöglichkeiten, wie etwa Teilaufleuchten und/oder Blinken und/oder durch Farbänderung.

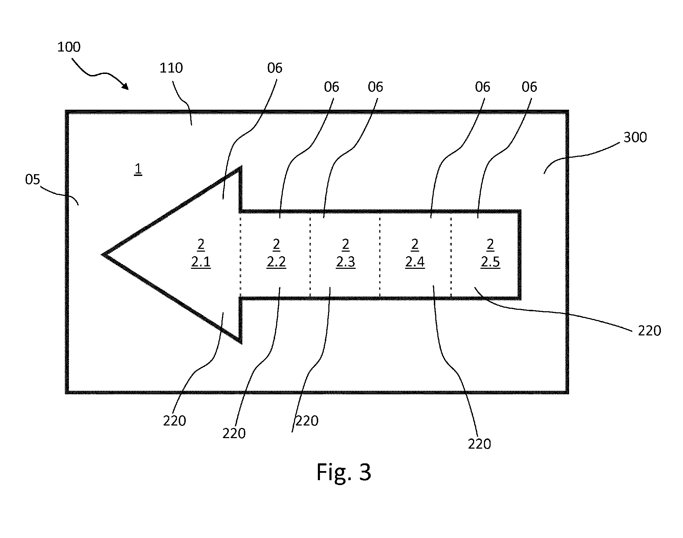

Ein in Fig. 3, Fig. 4 und Fig. 5 ganz oder in Teilen dargestelltes, beispielsweise zur Verwendung in einer als Heckleuchte ausgeführten Fahrzeugleuchte vorgesehenes und zur Erfüllung einer zur Anzeige einer durch ein zuvor beschriebenes Verfahren erzeugten Prä- und/oder Postfahrassistenzfunktion vorgesehenen Lichtsignals geeignetes Leuchtmittel 100 umfasst mindestens eine bei deren Betrieb wenigstens einen ersten Teil 1, 3, 5, 7, 10 einer leuchtenden Fläche 300 bildende erste Lichtquelle 110 und mindestens eine bei deren Betrieb wenigstens einen zweiten Teil 2, 4, 6, 8, 9 der leuchtenden Fläche 300 bildende zweite Lichtquelle 220.

Die mindestens eine erste Lichtquelle 110 strahlt bei deren Betrieb Licht einer Lichtfarbe einer ersten Lichtfunktion ab.

Die mindestens eine zweite Lichtquelle 220 ist in der Lage, bei deren Betrieb sowohl Licht einer Lichtfarbe der ersten Lichtfunktion, als auch Licht einer Lichtfarbe einer zweiten Lichtfunktion abzustrahlen, so dass sich bei Betrieb des Leuchtmittels 100 zumindest drei unterschiedliche Betriebszustände ergeben:
- einen als Kaltzustand bezeichneten ersten Betriebszustand, bei dem alle Lichtquellen 110, 220 außer Betrieb sind,
- einen als ersten Warmzustand bezeichneten zweiten Betriebszustand, bei dem alle Lichtquellen 110, 220 Licht der selben Lichtfarbe der ersten Lichtfunktion abstrahlen. Hierbei steht die gesamte leuchtende Fläche 300 der Erfüllung der ersten Lichtfunktion zur Verfügung, was deren Wahrnehmbarkeit und dadurch die Verkehrssicherheit einer mit einem solchen Leuchtmittel 100 ausgestatteten, momentan die erste Lichtfunktion erfüllenden Fahrzeugleuchte erhöht, und
- einen als zweiten Warmzustand bezeichneten dritten Betriebszustand, bei dem die mindestens eine erste Lichtquelle 110 Licht der Lichtfarbe der ersten Lichtfunktion abstrahlt und wenigstens eine zweite Lichtquelle 220 Licht der Lichtfarbe der zweiten Lichtfunktion abstrahlt.

Die mindestens eine erste Lichtquelle 110 kann durch wenigstens eine OLED 05 gebildet sein, die wie einleitend zum Stand der Technik beschrieben aufgebaut sein kann.

Die mindestens eine zweite Lichtquelle 220 kann durch wenigstens einen kurz als OLED-Stapel 06 gebildet sein, von denen im Falle mehrerer OLED-Stapel jeder OLED-Stapel einen Abschnitt 2.1, 2.2, 2.3, 2.4, 2.5 des zweiten Teils 2, 4, 6, 8, 9 der leuchtenden Fläche 300 bildet.

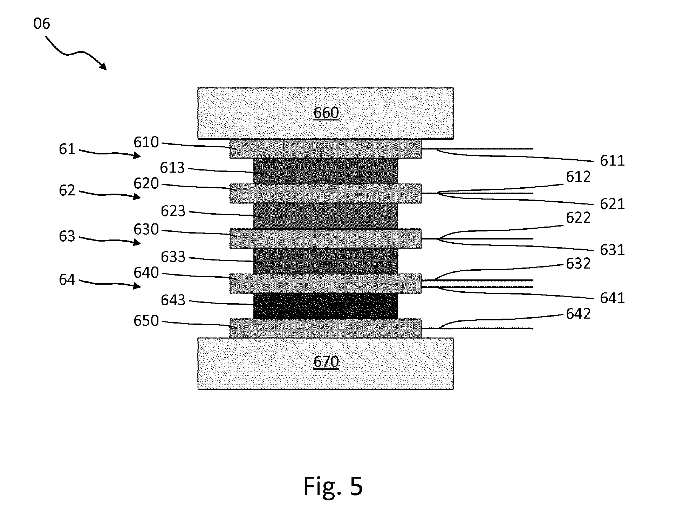

Jeder OLED-Stapel 06 besteht wie in Fig. 5 dargestellt aus mehreren, mindestens jedoch einer der Anzahl der unterschiedlichen Lichtfarben aller von dem Leuchtmittel 100 zu erfüllender Lichtfunktionen entsprechenden Zahl von übereinander angeordneten Stapellagen 61, 62, 63, 64, je mindestens eine Stapellage 61, 62, 63, 64 zur Lichtemission einer Lichtfarbe.

Eine Stapellage 61, 62, 63, 64 umfasst wenigstens mindestens eine zwischen elektrisch leitenden, beispielsweise metallischen Schichten 610, 620, 630, 640, 650 für Anode 611, 621, 631, 641 und/oder Kathode 612, 622, 632, 642 eingeschlossen Emitterschicht 613, 623, 633, 643, welche bei Anlegen einer Spannung und/oder einem Stromfluss zwischen Anode 611, 621, 631, 641 und Kathode 612, 622, 632, 642 einer Stapellage 61, 62, 63, 64 Licht einer Grundfarbe emittiert.

Eine Grundfarbe ist hierbei definiert als ein relativ enger Wellenlängenbereich beispielsweise im für das menschliche Auge sichtbaren Teil des elektromagnetischen Spektrums um eine bestimmte Wellenlänge herum, zur Erzielung eines Farbortes im Farbraum. Eine Grundfarbe bedeutet damit nicht zwingend monochromatisch oder quasimonochromatisch wie bei Laserlicht, wobei OLEDs typischerweise in einen relativ engen Wellenlängenbereich abstrahlen.

Zur Erzeugung einer Lichtemission des OLED-Stapels 06 einer Lichtfarbe wenigstens einer von dem Leuchtmittel 100 darzustellenden Lichtfunktion ist die Emission von Licht einer Grundfarbe mindestens einer Stapellage 61, 62, 63, 64 vorgesehen.

Mit anderen Worten ist jede Stapellage 61, 62, 63, 64 eines OLED-Stapels 06 in der Lage, genau eine Grundfarbe abzustrahlen. Die Stapellagen 61, 62, 63, 64 eines OLED-Stapels 06 sind gemeinsam in der Lage, Licht in einer Anzahl verschiedener Grundfarben abzustrahlen, welche erforderlich sind, damit der OLED-Stapel 06 die zur Erfüllung der von den verschiedenen von dem Leuchtmittel 100 zu erfüllenden Lichtfunktionen benötigten unterschiedlichen Lichtfarben abstrahlen kann.

Eine aus den Grundfarben der einzelnen Lichtquellen gemischte Lichtfarbe kann beispielsweise durch unterschiedliche Ansteuerung der LEDs und/oder OLED-Stapel und/oder OLEDs auch derart eingestellt werden, dass auch die nach ECE- und/oder FMVSS- und/oder SAE-Regelungen und/oder weiterer gesetzlicher und/oder regelungstechnischer Anforderungen an die einzuhaltenden Farborte eingehalten werden können.

Die Stapellagen 61, 62, 63, 64 eines OLED-Stapels 06 sind damit zumindest gemeinsam in der Lage, die zur Erfüllung der von dem Leuchtmittel 100 darzustellenden Lichtfunktionen benötigten unterschiedlichen Lichtfarben abzustrahlen.

Jeder OLED-Stapel 06 ist dadurch in der Lage, Licht in allen zur Erfüllung der von dem Leuchtmittel 100 darzustellenden Lichtfunktionen benötigten Lichtfarben zu erzeugen und abzustrahlen.

Zusammengefasst ergibt sich hierdurch in einem OLED-Stapel 06 eine vertikale Anordnung von übereinander angeordneten, durch je eine Stapellage 61, 62, 63, 64 gebildeten OLEDs, von denen je mindestens eine zur Lichtemission einer Lichtfarbe wenigstens einer Lichtfunktion des Leuchtmittels 100 vorgesehen ist.

Jeder OLED-Stapel 06 ist dadurch in der Lage, Licht in allen auf der leuchtenden Fläche 300 darzustellenden, zur Erfüllung der Lichtfunktionen einer Fahrzeugleuchte benötigten Lichtfarben zu erzeugen und abzustrahlen, in welcher Fahrzeugleuchte ein entsprechendes Leuchtmittel 100 zum Einsatz kommt.

Jeder OLED-Stapel 06 bildet dabei zumindest einen Abschnitt 2.1, 2.2, 2.3, 2.4, 2.5 des zweiten Teils 2, 4, 6, 8, 9 der leuchtenden Fläche 300 des Leuchtmittels 100.

Jede Stapellage 61, 62, 63, 64 ist jeweils für die Emission einer Grundfarbe zuständig. Durch die sich daraus ergebenden Farbmischung in vertikaler Richtung können somit in dem einen oder den mehreren einzelnen durch je einen OLED-Stapel 06 gebildeten zweiten Teilen 2, 4, 6, 8, 9 der leuchtenden Fläche 300 jeweils eine Vielzahl an Farben dargestellt werden. Das schließt auch die Änderung einer Lichtfunktion farbgleicher zweiter Teile 2, 4, 6, 8, 9 der leuchtenden Fläche 300 durch die Anpassung der erzeugten Leuchtdichte ein, so dass z. B. eine auf einem oder mehreren zweiten Teilen 2, 4, 6, 8, 9 der leuchtenden Fläche 300 dargestellte Schlusslichtfunktion durch Erhöhung der angelegten Gesamtspannung in eine Bremslichtfunktion umgewandelt werden kann.

Ist ein zweiter Teil 2, 4, 6, 8, 9 der leuchtenden Fläche 300 eines Leuchtmittels 100 beispielsweise ausschließlich dafür vorgesehen, Lichtfunktionen mit gelber und roter Lichtfarbe zu erfüllen, so können je OLED-Stapel 06 Stapellagen 61, 62, 63, 64 genügen, welche als Grundfarben gelbes und rotes Licht abstrahlen. Kommt bei einem für eine andere Fahrzeugleuchte vorgesehenen Leuchtmittel 100 anstelle oder zusätzlich zu einer Lichtfunktion mit gelber oder roter Lichtfarbe beispielsweise eine Rückfahrlichtfunktion weißer Lichtfarbe hinzu, so können alternativ oder zusätzlich wahlweise ein oder mehrere zusätzliche Stapellagen 61, 62, 63, 64 vorgesehen sein, welche allein oder zusammen oder gemeinsam mit einer oder mehreren verbleibenden Stapellagen weißes Licht abstrahlen.

Alternativ oder zusätzlich können die Stapellagen 61, 62, 63, 64 eines OLED-Stapels 06 Licht ganz anderer Grundfarben abzustrahlen in der Lage sein, mit welchen Grundfarben sich die benötigten Lichtfarben oder nach belieben Lichtfarben additiv mischen lassen.

Zusammengefasst können die unterschiedlichen Grundfarben der verschiedenen Stapellagen 61, 62, 63, 64 eines OLED-Stapels 06 den unterschiedlichen Lichtfarben der darzustellenden Lichtfunktionen des Leuchtmittels 100 entsprechen, oder die Stapellagen 61, 62, 63, 64 können Grundfarben entsprechend einer RGB- (Rot-Grün-Blau) oder RGBY- (Rot-Grün-Blau-Gelb) Farbmischung aufweisen.

Je nach zur Erzeugung der von der Darstellungsfläche 05 darzustellenden, von dem Leuchtmittel 10 zu erfüllenden Lichtfunktionen unterschiedlicher Lichtfarben benötigter Grundfarben weist damit jeder OLED-Stapel 06 zwei, drei oder mehrere Stapellagen 61, 62, 63, 64 unterschiedlicher Grundfarben auf, wobei grundsätzlich jeder OLED-Stapel 06 mehr als eine Stapellage 61, 62, 63, 64 gleicher Grundfarbe aufweisen kann.

In einem OLED-Stapel 06 können mehrere Licht gleicher Grundfarbe emittierende Stapellagen 61, 62, 63, 64 vorgesehen sein, beispielsweise um die Gesamtlichtemission der entsprechenden Grundfarbe zu erhöhen.

Die vertikale Anordnung der Stapellagen 61, 62, 63, 64 in einem OLED-Stapel 06 erlaubt es, auf eine aufwändige laterale Strukturierung zu verzichten, d. h. es sind keine aufwändigen und teuren Lithographieschritte bzw. Elektrodenstrukturierungen nötig, die für eine Segmentierung von Pixeln bzw. Streifen eingesetzt werden müssen, oder es werden zumindest weniger Lithographieschritte bzw. Elektrodenstrukturierungen benötigt.

Eine Stapellage 61, 62, 63, 64 kann eine oder mehrere elektrisch leitende, beispielsweise metallische Schichten 610, 620, 630, 640, 650 für Anode 611, 621, 631, 641 und/oder Kathode 612, 622, 632, 642 zur Bestromung der mindestens einen Emitterschicht 613, 623, 633, 643 der jeweiligen Stapellage 61, 62, 63, 64 umfassen.

Dabei kann eine als Anode 621, 631, 641 und/oder Kathode 612, 622, 632 einer Stapellage 61, 62, 63, 64 dienende metallische Schicht 620, 630, 640 als Anode 621, 631, 641 und/oder Kathode 612, 622, 632 einer im OLED-Stapel 06 darüber und/oder darunter liegende Stapellage 61, 62, 63, 64 dienen.

Eine Stapellage 61, 62, 63, 64 kann eine Deckschicht 660 beispielsweise zum Schutz gegen Wasser, Sauerstoff sowie zum Schutz gegen andere Umwelteinflüsse, wie etwa Kratzbeschädigung und/oder Druckbelastung umfassen. Vorzugsweise handelt es sich hierbei um eine oberste Stapellage 61 im OLED-Stapel 06.

Eine Stapellage 61, 62, 63, 64 kann eine Basisschicht 670 beispielsweise zum Schutz gegen Wasser, Sauerstoff sowie zum Schutz gegen andere Umwelteinflüsse, wie etwa Kratzbeschädigung und/oder Druckbelastung umfassen, auf welcher Basisschicht 670 der OLED-Stapel 06 aufgebaut sein kann. Vorzugsweise handelt es sich hierbei um eine unterste Stapellage 64 im OLED-Stapel 06. Die Basisschicht 670 kann beispielsweise als eine Substratschicht ausgeführt sein.

Alternativ oder zusätzlich können eine gemeinsame Deckschicht 660 und/oder Basisschicht 670 für mehrere oder alle zumindest jeweils einen Abschnitt 2.1, 2.2, 2.3, 2.4, 2.5 eines zweiten Teils 2, 4, 6, 8, 9 der leuchtenden Fläche 300 bildenden OLED-Stapel 06 vorgesehen sein. Die gemeinsame Deckschicht 660 und/oder Basisschicht 670 kann beispielsweise als eine Substratschicht ausgeführt sein.

Grundsätzlich ist denkbar, dass eine gemeinsame Deckschicht 660 und/oder Basisschicht 670 für alle die leuchtende Fläche 300 bildenden eine oder mehrere OLEDs 05 und eine oder mehrere OLED-Stapel 06 vorgesehen ist, wobei die Basisschicht 670 beispielsweise als eine Substratschicht ausgeführt sein kann.

Zusammengefasst kann eine Deckschicht 660 und/oder Basisschicht 670, beispielsweise eine gemeinsame Deckschicht 660 und/oder Basisschicht 670, eine Substratschicht ganz oder teilweise umfassen oder von einer Substratschicht ganz oder teilweise umfasst oder gebildet werden.

Das Leuchtmittel 100 kann durch die spezielle Ausgestaltung seines mindestens einen zweiten Teils 2, 4, 6, 8, 9 der leuchtenden Fläche 300 ohne Einschränkung seiner Funktionalität einer Abstrahlung einer Lichtfarbe zur Erfüllung einer Lichtfunktion auf der gesamten leuchtendne Fläche 300 dafür vorgesehen werden, eine Prä- und/oder Postfahrassistenzfunktion durch Abgabe entsprechender Lichtsignale vermittels einer oder mehreren zur Erfüllung einer zweiten Lichtfunktion vorgesehener zweiten Lichtquellen 220 zu verwirklichen.

Anhand einer entsprechenden Ansteuerung kann mittels des beschriebenen Leuchtmittels 100 beispielsweise eine Prä- und/oder Postfahr-Assistenzfunktion durch Mehrfachverwendung einer in ihrer Gesamtheit für eine erste Lichtfunktion vorgesehenen, entsprechend aufgebaute leuchtende Fläche 300 verwirklicht werden, welche einem Benutzer eines Fahrzeugs vor und/oder nach einer Fahrt Informationen über den Zustand des Fahrzeugs anzeigt, ohne dass sich dieser im Fahrzeug befinden muss.

Um beispielsweise einen Füllstand eines Energiespeichers eines Kraftfahrzeugs, wie beispielsweise eines Kraftstofftanks und/oder einer Fahrbatterie abzufragen, muss bis dato im Fahrzeug Platz genommen werden.

In Verbindung beispielsweise mit mit anderen Benutzern geteilten Fahrzeugen, wie etwa Car-Sharing-Fahrzeugen, Mietfahrzeugen, Elektrofahrzeugen, aber auch bei der alleinigen Nutzung von Fahrzeugen durch nur einen Benutzer ergibt sich immer die Notwendigkeit, sich in das Fahrzeug zu setzen, um Informationen zu erhalten, die Aufschluss beispielsweise über die mit dem Fahrzeug zurücklegbare Strecke geben.

Das Leuchtmittel 100 in Verbindung mit einer entsprechenden Ansteuerung schafft hier Abhilfe, indem eine oder mehrere zur Erfüllung einer oder mehrerer Lichtfunktionen einer Fahrzeugleuchte vorgesehene, vorzugsweise zweite Lichtquellen 220 verwendet werden, um bei einer Annäherung eines Benutzers an ein Fahrzeug - sei es automatisch oder durch ein Signal des Benutzers - oder permanent oder in Zyklen, entsprechende von einem Benutzer erkennbare Lichtsignale an die Umgebung abgibt, aus denen der Benutzer die gewünschten Informationen ableiten kann.

So kann beispielsweise die Abgabe grünen Lichts bei der Annäherung oder dem Entfernen eines Benutzers eine zumindest innerhalb einer zu erwartenden Nutzung volle Verfügbarkeit des Fahrzeugs signalisieren, wohingegen ein rotes Aufleuchten den Bedarf des Nachtankens oder Aufladens des Energiespeichers anzeigen kann.

Vorteile ergeben sich insbesondere bei der abwechselnden Nutzung von Fahrzeugen durch mehrere Benutzer, wodurch vor Fahrtantritt auf einfache Weise ein voll verfügbares Fahrzeug ausgewählt werden kann.

Denkbar ist in diesem Zusammenhang auch eine Speicherung benutzertypischen Verhaltens, wie beispielsweise durchschnittlich und/oder die letzten Fahrzyklen zurückgelegten Wegstrecken und/oder der wochentagstypisch zurückgelegten Wegstrecke, welches bei der Anzeige Berücksichtigung findet.

Technische Vorteile ergeben sich unter Anderem durch eine Reduktion unbeabsichtigt verbrauchter unvollständiger Ladezyklen bei Miet-Elektrofahrzeugen.

Das Leuchtmittel 100 kann wie in Fig. 3 dargestellt mit mehreren, beispielsweise nebeneinander angeordneten, zur Erfüllung einer zweiten Lichtfunktion vorgesehenen zweiten Lichtquellen 220 ausgeführt sein.

Dabei kann eine individuelle Ansteuerung für die einzelnen zweiten Lichtquellen 220 einhergehend mit einem Wisch- und/oder Lauflichteffekt vorgesehen sein, wobei:
- der Lauflichteffekt hierbei permanent durchlaufend ausgestaltet ist, wobei von einer Seite - in Fig. 3 beispielsweise von rechts - her kommend zuerst eingeschaltete zweite Lichtquellen 220 bereits wieder erlöschen, während andere zweite Lichtquellen 220 - in Fig. 3 weiter links - erst noch eingeschaltet werden, und
- der Wischeffekt hingegen vor sieht, dass die einzelnen zweiten Lichtquellen 220 von einem beispielsweise seitlichen Rand des zweiten Teils 2 der leuchtenden Fläche 300 her nacheinander eingeschaltet oder hochgedimmt werden bis alle zweiten Lichtquellen 220 leuchten und/oder ausgehend vom Betrieb aller zweiter Lichtquellen 220 von einem, beispielsweise dem selben beispielsweise seitlichen Rand des zweiten Teils der leuchtenden Fläche ausgehend nacheinander ausgeschaltet werden.

Der Wischeffekt und/oder der Lauflichteffekt können während des beispielsweise einmaligen oder wiederholten Ein- und/oder Ausschaltens der zweiten Lichtfunktion auftreten. Ein einmaliges Ein- und Ausschalten liegt beispielsweise für die Bremslichtfunktion bei einem Bremsvorgang vor. Ein wiederholtes Ein- und Ausschalten bei Betrieb einer einer Fahrtrichtungsanzeige dienenden Wiederholblinklichtfunktion.

Unabhängig von der Wahl der Ausführung des Lauflichteffekts und/oder des Wischeffekts wird hierdurch die Aufmerksamkeit - obgleich es sich nur um Bruchteile von Sekunden beim verzögerten Ein- und/oder Ausschalten handelt - unweigerlich auf die zweite Lichtfunktion gelenkt, so dass diese - obgleich diese niemals wie die erste Lichtfunktion die volle leuchtende Fläche 300 einnimmt - ebenfalls verstärkt wahrgenommen wird. Dadurch ist die Wahrnehmung nicht nur der bei alleiniger momentaner Verwendung die vollständige leuchtende Fläche 300 einnehmenden ersten Lichtfunktion, sondern auch der zweiten Lichtfunktion verstärkt, was die Aufmerksamkeit auf beide Lichtfunktionen gleichermaßen lenkt, und dadurch einer Erhöhung der Verkehrssicherheit beiträgt.

Die Erfindung schafft eine Verbesserung der Sicht- und Wahrnehmbarkeit von Lichtfunktionen eines beispielsweise zur Verwendung in einer beispielsweise als Heckleuchte für ein Kraftfahrzeug ausgebildeten Fahrzeugleuchte vorgesehenen Leuchtmittels 100 durch eine Segmentierung einer von Lichtquellen 110, 220 für wenigstens zwei Lichtfunktionen gebildeten leuchtenden Fläche 300 in mehrere Partien die zumindest einen ersten Teil 1, 3, 5, 7, 10 und einen zweiten Teil 2, 4, 6, 8, 9 einer leuchtenden Fläche 300 bilden. Einzelne Partien können wie in Fig. 3 dargestellt zusätzlich in einzeln ansteuerbare Abschnitte 2.1, 2.2, 2.3, 2.4, 2.5 unterteilt sein.

Wenigstens ein Teil aller Partien bestehen hierzu aus vertikalen OLED-Stapeln 06, die wiederum aus mehreren übereinander angeordneten Stapellagen 61, 62, 63, 64 bestehen, je mindestens eine Stapellage 61, 62, 63, 64 zur Lichtemission einer Lichtfarbe. Die verbleibenden Partien sind durch OLEDs 05 mit nur einer lichtemittierenden Stapellage gebildet, welche damit Licht nur einer ersten Lichtfarbe abzustrahlen in der Lage sind. Die OLED-Stapel 06 sind in der Lage, Licht sowohl der ersten Lichtfarbe, als auch zumindest einer zweiten Lichtfarbe abzustrahlen.

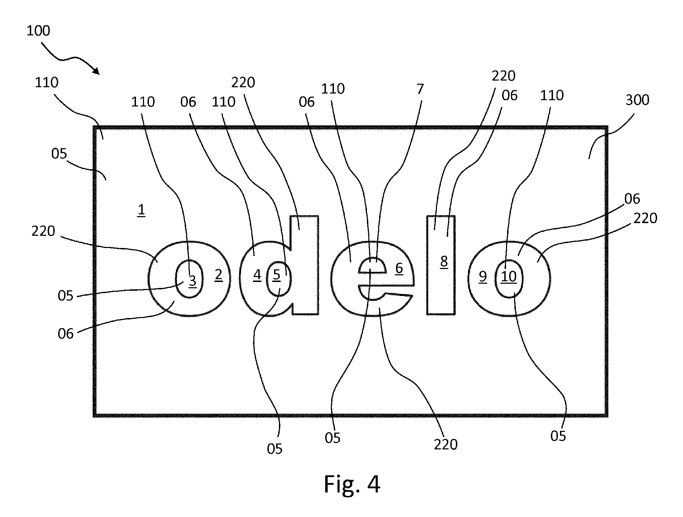

Dadurch kann die gesamte leuchtende Fläche 300 zur Darstellung einer ersten Lichtfunktion der ersten Lichtfarbe verwendet werden, wohingegen ein durch die Partien der OLED-Stapel 06 gebildeter zweiter Teil 2, 4, 6, 8, 9 der leuchtenden Fläche 300 zusätzlich für mindestens eine weitere Lichtfunktion mit einer zweiten Lichtfarbe verwendet werden kann. Dadurch kann beispielsweise ein verstecktes Lichtzeichen, wie etwa ein Schriftzug verwirklicht werden (Fig. 4), oder eine dynamische Lichtfunktion, beispielsweise eine Wischfunktion für eine Wiederholblinklichtfunktion durch Zuschaltung einer steigenden Zahl von durch OLED-Stapel 06 gebildeten Abschnitten 2.1, 2.2, 2.3, 2.4, 2.5 wenigstens eines zweiten Teils 2 der leuchtenden Fläche 300, welche Licht einer zweiten Lichtfarbe einer zweiten Lichtfunktion bei deren Bedarf abstrahlen (Fig. 3).

Wichtig ist hervorzuheben, dass die leuchtende Fläche 300 so segmentiert werden kann, dass in ihr unterschiedliche Teilflächen für unterschiedliche Funktionalitäten untergebracht sind.

Auch können die Teilflächen Licht gleicher und unterschiedlicher Lichtfarben abstrahlen. Die einen zweiten Teil 2, 4, 6, 8, 9 der leuchtenden Fläche 300 bildenden zweiten Lichtquellen 220 sind hier als zur Emission unterschiedlicher Lichtfarben geeignete OLED-Stapel 06 aufgebaut.

Fig. 3 zeigt eine leuchtende Fläche 300 eines Leuchtmittels 100, die in einen ersten Teil 1 und einen zweiten Teil 2 untergliedert ist. Der erste Teil 1 ist durch mindestens eine als wenigstens eine OLED 05 ausgeführte erste Lichtquelle 110 gebildet. Der zweite Teil 2 ist durch mindestens eine als wenigstens ein OLED-Stapel 06 ausgeführte zweite Lichtquelle 220 gebildet. Der zweite Teil 2 ist mehrere Abschnitte 2.1, 2.2, 2.3, 2.4, 2.5 unterteilt, die je nach Ansteuerung der die Abschnitte 2.1, 2.2, 2.3, 2.4, 2.5 bildenden Lichtquellen 220 zum Leuchten gebracht werden können. Die Einzelansteuerung beinhaltet auch die Ausleuchtung in unterschiedlichen Farben, mit PWM-Werten, mit Blinken, etc.

In Fig. 4 ist grundsätzlich denkbar, dass nur die ersten Teile 1, 3, 5, 7 und 10 der leuchtenden Fläche 300 zum leuchten gebracht werden, wodurch der beispielhaft dargestellte, durch die nicht zusammenhängende zweite Teile 1, 3, 5, 7 und 10 der leuchtenden Fläche 300 gebildete Schriftzug als nicht-leuchtendes Element aus der leuchtenden Fläche 300 heraus sticht. Auch eine invertierte Ausleuchtung ist denkbar.

Vorteile ergeben sich unter anderem dadurch, dass eine große Fläche ausgeleuchtet werden kann und zudem die Aufmerksamkeit auf die leuchtende Fläche 300 erhöht werden kann, in dem beispielsweise ein in Fig. 3 dargestellter Pfeil mit Wischeffekt im Fahrtrichtungsanzeiger bei der Ausleuchtung nochmals in höherer Leuchtdichte abstrahlt. Auch andere Ansteuerungen zur Erhöhung der Aufmerksamkeit der umgebenden Fahrer/Personen auf die leuchtende Fläche 300 sind denkbar.

Grundsätzlich ist denkbar, beispielsweise durch eine andere Bestromung und/oder Abgabe einer anderen Lichtfarbe eines oder mehrerer zweiter Teile 2, 4, 6, 8, 9, als eines oder mehrerer benachbarter ersten Teile 1, 3, 5, 7, 10 der leuchtenden Fläche 300 eine Information, etwa eine Botschaft, beispielsweise eine Werbebotschaft zu vermitteln.

Auch könnte mit dem oder den in dem ersten Teil 1, 3, 5, 7, 10 der leuchtenden Fläche 300 versteckten zweiten Teilen 2, 4, 6, 8, 9 eine weitere Funktionalität, wie beispielsweise eine Prä- oder Postfahrassistenzfunktion vermittels einer mit einem entsprechenden Leuchtmittel 100 ausgestatteten Fahrzeugleuchte verwirklich werden. So kann auch hier mit den in dem ersten Teil 1, 3, 5, 7, 10 der leuchtenden Fläche 300 versteckten zweiten Teilen 2, 4, 6, 8, 9 beispielsweise in einer anderen Lichtfarbe ein geladener Akku visualisiert werden, wobei um so mehr Abschnitte 2.1, 2.2, 2.3, 2.4, 2.5 leuchten, je voller der Akku ist.

Ebenso wichtig ist hervorzuheben, dass das Leuchtmittel 100 erfindungsgemäß mit einer zur Erfüllung einer ersten Lichtfunktion einer Fahrzeugleuchte vorgesehenen leuchtenden Fläche 300 derart ausgebildet ist, dass die leuchtende Fläche 300 einerseits vollständig der Erfüllung der ersten Lichtfunktion zugeordnet ist, wenn nur die erste Lichtfunktion benötigt ist, und wenn eine zweite Lichtfunktion allein oder gemeinsam mit der ersten Lichtfunktion benötigt wird, die zweite Lichtfunktion als anders leuchtender Abschnitt der leuchtenden Fläche 300 verwirklicht wird.

Das Leuchtmittel 100 weist durch die Verwendung von OLEDs 05 und OLED-Stapeln 06 als Lichtquellen für die leuchtende Fläche 300 ein besonders homogenes Erscheinungsbild der leuchtenden Fläche 300 auf.

Das Leuchtmittel 100 ist geeignet, die Wahrnehmbarkeit einer nur einen Teil der leuchtenden Fläche einnehmenden zweiten Lichtfunktion zu steigern, beispielsweise durch die beschriebenen Wisch- und/oder Lauflichteffekte.

Ein zuvor beschriebenes Leuchtmittel 100 kann zur Verwendung in einer Fahrzeugleuchte mit einem von einem Leuchtengehäuse und einer Lichtscheibe wenigstens zum Teil umschlossenen Leuchteninnenraum vorgesehen sein. Die leuchtende Fläche 300 des Leuchtmittels 100 ist von außerhalb des Leuchteninnenraums betrachtet sichtbar.

Die Fahrzeugleuchte kann einen im Wesentlichen von einem Leuchtengehäuse und einer Lichtscheibe zumindest teilweise umschlossenen Leuchteninnenraum aufweisen, in dem das Leuchtmittel 100 beherbergt sein kann.

Alternativ kann die leuchtende Fläche 300 zumindest einen Teil einer Lichtscheibe bilden und/oder in eine Lichtscheibe beispielsweise integriert sein.

Eine zusätzliche Variationsmöglichkeit ergibt sich dadurch, dass die leuchtende Fläche 300 in einen von außerhalb des Leuchteninnenraums beim Blick durch die Lichtscheibe hindurch sichtbaren Teil des Leuchtengehäuses beispielsweise integriert sein kann.

Die Fahrzeugleuchte ist bevorzugt als eine Heckleuchte für ein Kraftfahrzeug ausgebildet.

Alternativ oder zusätzlich kann die Fahrzeugleuchte als an oder in einem Fahrzeug vorgesehene Signalleuchte ausgeführt sein.

Alternativ oder zusätzlich kann die Fahrzeugleuchte als ein Scheinwerfer und/oder eine Tagfahrleuchte und/oder eine Parkleuchte ausgeführt sein.

Die Fahrzeugleuchte kann einzelne Merkmale oder eine beliebige Kombination von zwei oder mehreren Merkmalen eines zuvor beschriebenen Leuchtmittels 100 aufweisen, ebenso wie das Leuchtmittel 100 einzelne Merkmale oder eine beliebige Kombination von zwei oder mehreren Merkmalen einer zuvor beschriebenen Fahrzeugleuchte aufweisen kann.

Alternativ oder zusätzlich können das Leuchtmittel 100 und/oder die Fahrzeugleuchte einzelne oder eine Kombination mehrerer einleitend in Verbindung mit dem Stand der Technik und/oder in einem oder mehreren der zum Stand der Technik erwähnten Dokumente und/oder in der voranstehenden Beschreibung zu den in den Zeichnungen dargestellten Ausführungsbeispielen beschriebene Merkmale aufweisen.

Die Erfindung ist insbesondere im Bereich der Herstellung und/oder des Aufbaus von Fahrzeugleuchten gewerblich anwendbar.

### Bezugszeichenliste

- 1: erster Teil der leuchtenden Fläche 300
- 2: zweiter Teil der leuchtenden Fläche 300
- 2.1: Abschnitt eines zweiten Teils der leuchtenden Fläche 300
- 2.2: Abschnitt eines zweiten Teils der leuchtenden Fläche 300
- 2.3: Abschnitt eines zweiten Teils der leuchtenden Fläche 300
- 2.4: Abschnitt eines zweiten Teils der leuchtenden Fläche 300
- 2.5: Abschnitt eines zweiten Teils der leuchtenden Fläche 300
- 3: erster Teil der leuchtenden Fläche 300
- 4: zweiter Teil der leuchtenden Fläche 300
- 5: erster Teil der leuchtenden Fläche 300
- 6: zweiter Teil der leuchtenden Fläche 300
- 7: erster Teil der leuchtenden Fläche 300
- 8: zweiter Teil der leuchtenden Fläche 300
- 9: zweiter Teil der leuchtenden Fläche 300
- 10: erster Teil der leuchtenden Fläche 300
- 05: OLED
- 06: OLED-Stapel
- 61: Stapellage
- 62: Stapellage
- 63: Stapellage
- 64: Stapellage
- 100: Leuchtmittel
- 110: erste Lichtquelle
- 220: zweite Lichtquelle
- 300: leuchtende Fläche
- 301: Teilfläche der leuchtenden Fläche 300
- 302: Teilfläche der leuchtenden Fläche 300
- 303: Teilfläche der leuchtenden Fläche 300
- 304: Teilfläche der leuchtenden Fläche 300
- 305: Teilfläche der leuchtenden Fläche 300
- 306: Teilfläche der leuchtenden Fläche 300
- 307: Teilfläche der leuchtenden Fläche 300
- 308: Teilfläche der leuchtenden Fläche 300
- 610: elektrisch leitende Schicht
- 611: Anode
- 612: Kathode
- 620: elektrisch leitende Schicht
- 621: Anode
- 622: Kathode
- 630: elektrisch leitende Schicht
- 631: Anode
- 632: Kathode
- 640: elektrisch leitende Schicht
- 641: Anode
- 642: Kathode
- 650: elektrisch leitende Schicht
- 660: Deckschicht
- 670: Basisschicht

## Patentansprüche

1. Verfahren zur Erzeugung einer Prä- und/oder Postfahrassistenzfunktion eines Fahrzeugs durch Betrieb mindestens einer Lichtquelle wenigstens eines Leuchtmittels zumindest einer Fahrzeugleuchte des Fahrzeugs, welches die Erzeugung eines oder mehrerer zur Anzeige einer Prä- und/oder Postfahrassistenzfunktion dienender Lichtsignale vorsieht, die durch Betrieb mindestens einer Lichtquelle wenigstens eines Leuchtmittels zumindest einer Fahrzeugleuchte erhalten werden, wobei die durch ein oder mehrere Lichtsignale einer oder mehrerer Fahrzeugleuchten erfüllte Prä- und/oder Postfahr-Assistenzfunktion einem Benutzer eines Fahrzeugs vor und/oder nach einer Fahrt Informationen über den Zustand des Fahrzeugs anzeigt, ohne dass sich dieser im Fahrzeug befindet, und das mindestens eine der Erfüllung der Prä- und/oder Postfahrassistenzfunktion dienende Lichtsignal durch eine veränderliche und/oder vorgegebene Lichtfarbe und/oder eine veränderliche und/oder vorgegebene Wiederholsequenz und/oder durch eine veränderliche und/oder vorgegebene Leuchtfläche eine eindeutige Information über die Verfügbarkeit und/oder Fahrbereitschaft und/oder Reichweite eines Fahrzeugs abgibt.

2. Verfahren nach Anspruch 1, wobei eine Mehrfachverwendung einer oder mehrerer zur Erfüllung wenigstens einer Lichtfunktion zumindest einer Fahrzeugleuchte vorgesehener Lichtquellen zur Erzeugung mindestens eines Lichtsignals zur Erfüllung eine Prä- und/oder Postfahrassistenzfunktion vorgesehen ist, wobei mindestens ein zur Erfüllung der Prä- und/oder Postfahrassistenzfunktion vorgesehenes Lichtsignal eine Lichtfarbe aufweist, wie sie zur Erfüllung der von einer Fahrzeugleuchte erfüllbaren Lichtfunktionen notwendig ist.

3. Verfahren nach Anspruch 2, wobei mindestens ein zur Erfüllung der Prä- und/oder Postfahrassistenzfunktion vorgesehenes Lichtsignal eine für eine bestimmte Lichtfunktion vorgeschriebene Lichtverteilung aufweist.

4. Verfahren nach einem der Ansprüche 1, 2 oder 3, wobei wenigstens eine eigens zur Erfüllung mindestens eines der Prä- und/oder Postfahrassistenzfunktion dienenden Lichtsignals vorgesehene Lichtquelle zumindest eines Leuchtmittels wenigstens einer Fahrzeugleuchte vorgesehen ist.

5. Verfahren nach Anspruch 4, wobei eine eigens zur Erfüllung eines der Prä- und/oder Postfahrassistenzfunktion dienenden Lichtsignals vorgesehene Lichtquelle eine Lichtfarbe aufweist, wie sie zur Erfüllung der Lichtfunktionen einer Fahrzeugleuchte nicht notwendig ist.

6. Verfahren nach Anspruch 4 oder 5, wobei ein eigens zur Erfüllung der Prä- und/oder Postfahrassistenzfunktion dienendes Lichtsignal eine für eine bestimmte Lichtfunktion vorgeschriebene Lichtverteilung aufweist.

7. Verfahren nach einem der voranstehenden Ansprüche, wobei das Verfahren vorsieht, eine Annäherung eines Benutzers an ein Fahrzeug zu erfassen und/oder zu überwachen und bei erfasster und/oder erkannter Annäherung wenigstens ein Lichtsignal zu erzeugen.

8. Verfahren nach einem der voranstehenden Ansprüche, wobei das Verfahren vorsieht, eine bestimmte Frequenz oder ein bestimmtes Frequenzband elektromagnetischer Wellen zu überwachen, auf welcher Frequenz und/oder innerhalb welchen Frequenzbands ein Signal von einem Benutzer eines Fahrzeugs erzeug- und/oder veränderbar ist, und bei empfangenem Signal wenigstens ein Lichtsignal zu erzeugen.

9. Verfahren nach einem der voranstehenden Ansprüche, wobei das Verfahren vorsieht, in regelmäßigen Abständen und/oder durch ein von einem Benutzer auslösbares Ereignis gesteuert, eine bestimmte Frequenz oder ein bestimmtes Frequenzband elektromagnetischer Wellen zu erzeugen, welche durch Interaktion mit einer von einem Benutzer eines Fahrzeugs mitzuführenden Identifikationseinrichtung eine Antwort ebenfalls in Form elektromagnetischer Wellen erzeugt, die wiederum erfasst wird oder erfassbar ist, und bei erfasster Antwort wenigstens ein Lichtsignal zu erzeugen.

10. Verfahren nach einem der voranstehenden Ansprüche, wobei das Verfahren vorsieht, das Verlassen eines Fahrzeugs durch einen Benutzer des Fahrzeugs zu überwachen und nach erfasstem und/oder erkanntem Verlassen des Fahrzeugs wenigstens ein Lichtsignal zu erzeugen.

11. Verfahren nach einem der voranstehenden Ansprüche, wobei das Verfahren eine Vorgabe der Anforderungen eines Benutzers an ein Fahrzeug vorsieht und entweder exakt diesen Anforderungen genügende Fahrzeuge durch Abgabe entsprechender Lichtsignale deren Verfügbarkeit signalisieren, oder solche Fahrzeuge durch Abgabe entsprechender Lichtsignale deren Verfügbarkeit signalisieren, die zumindest die Anforderungen des Benutzers erfüllen, demnach auch weit höheren Anforderungen genügen.

12. Verfahren nach einem der voranstehenden Ansprüche, wobei das Verfahren eine Speicherung benutzertypischen Verhaltens vorsieht, welches bei der Anzeige der Prä- und/oder Postfahrassistenzfunktion Berücksichtigung findet.
